(19) Europäisches Patentamt
European Patent Office
Office européen des brevets

(11) **EP 3 397 984 B1**

(12) **FASCICULE DE BREVET EUROPEEN**

(45) Date de publication et mention
de la délivrance du brevet:
**25.12.2019 Bulletin 2019/52**

(21) Numéro de dépôt: **16804787.6**

(22) Date de dépôt: **30.11.2016**

(51) Int Cl.:
*G01S 17/10* (2006.01)   *G01S 7/481* (2006.01)
*G01S 7/486* (2006.01)   *G01S 7/499* (2006.01)
*G01S 17/42* (2006.01)

(86) Numéro de dépôt international:
**PCT/EP2016/079287**

(87) Numéro de publication internationale:
**WO 2017/114622 (06.07.2017 Gazette 2017/27)**

(54) **PROCÉDÉ ET SYSTÈME DE TÉLÉMÉTRIE PAR IMAGEUR**

TELEMETRIEVERFAHREN UND -SYSTEM UNTER VERWENDUNG EINES BILDGEBERS

TELEMETRY METHOD AND SYSTEM USING AN IMAGER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **29.12.2015 FR 1502709**

(43) Date de publication de la demande:
**07.11.2018 Bulletin 2018/45**

(73) Titulaire: **Thales
92400 Courbevoie (FR)**

(72) Inventeur: **ROUSSEAU, Pascal
78995 Elancourt Cedex (FR)**

(74) Mandataire: **Henriot, Marie-Pierre
Marks & Clerk France
Conseils en Propriété Industrielle
Immeuble Visium
22, Avenue Aristide Briand
94117 Arcueil Cedex (FR)**

(56) Documents cités:
**EP-A1- 2 515 066    WO-A1-2010/063805**

**Description**

Le domaine de l'invention est celui de la mesure de distance à partir du temps de propagation de la lumière entre un objet à télémétrer, appelé cible et le système. Le système émet de la lumière en direction de la cible. Une fraction de la lumière émise est rétrodiffusée vers le système. Le système détecte cette lumière et estime la distance à partir du temps de propagation aller et retour de la lumière. Ce principe de télémétrie est utilisé depuis longtemps par les télémètres impulsionnels laser. Le document EP 2 515 066 décrit par exemple un dispositif comportant un émetteur d'impulsions et un détecteur matriciel, mettant en œuvre un procédé de mesure de distance d'une cible.

Ces télémètres permettent de mesurer les distances de cibles non coopératives avec une précision métrique. Il est nécessaire que l'émission du télémètre soit bien orientée en direction de la cible et que le flux retourné soit suffisamment important pour pouvoir être détecté.

Lorsque la cible à atteindre est petite et à grande distance il y a deux axes pour favoriser la performance. Le premier est l'augmentation de l'éclairement de la cible. Le deuxième est d'améliorer la sensibilité du récepteur.

L'augmentation de l'éclairement de la cible peut être obtenue en augmentant le flux de l'émetteur et en réduisant la divergence de l'émission. L'augmentation du flux de l'émission est souvent limitée par des contraintes de sécurité oculaire et la réduction de la divergence impose une forte précision de l'alignement de l'émission sur la cible.

Le principe d'avoir dans le télémètre une détection spatiale permettant un bon alignement de l'émission et une détection temporelle pour la précision de la télémétrie est décrit dans les brevets PCT/EP2009/066360 et EP13783289.5. Malgré l'amélioration du processus de mesure de distance en fournissant le meilleur alignement possible sur la partie la plus contributive de la cible par la détection spatiale, la portée est limitée par la capacité de la détection temporelle.

L'invention a pour objet un procédé de mesure de distance d'une cible au moyen d'un émetteur d'impulsions et d'un détecteur matriciel comportant des mini-détecteurs spatiaux couplés à des condensateurs de durée d'intégration commandée par une polarisation des mini-détecteurs, qui comporte les étapes suivantes:

A) Détermination de la direction de la cible par rapport à une direction connue des impulsions émises, et d'une première période d'intégration pendant laquelle un écho d'une impulsion émise par l'émetteur et rétrodiffusée par la cible, est détecté par le détecteur, déterminant une première tranche de distances dans laquelle est située la cible,
B) Réduction de la première tranche de distances au cours d'itérations successives de télémétrie c'est-à-dire émission d'une impulsion par l'émetteur et test de détection d'un écho par le détecteur, réalisées :

- à partir de la première période d'intégration,
- par dichotomie de la durée d'intégration et jusqu'à atteindre une durée d'intégration minimale prédéterminée, et
- basées sur la détection d'un écho de la cible,

une deuxième tranche de distances dans laquelle est située la cible, et incluse dans la première tranche de distances, étant déterminée à l'issue de cette étape à partir de la période d'intégration de la dernière itération,
C) Réduction de la deuxième tranche de distances au cours d'itérations successives de télémétrie réalisées :

- à partir de la période d'intégration issue de l'étape B,
- par variations de la position de la période d'intégration, avec des durées d'intégration constantes,
- et basées sur la détection d'un écho de la cible,

une troisième tranche de distances dans laquelle est située la cible, et incluse dans la deuxième tranche de distances, étant déterminée à l'issue de cette étape.

Le niveau de bruit associé à la détection spatiale peut être beaucoup plus faible que celui associé à la détection temporelle. La détection classique à l'aide d'une photodiode suivie d'un circuit transimpédance ne permet pas une aussi bonne sensibilité qu'un imageur (détecteur spatial matriciel). La présence de l'imageur permet un excellent alignement de l'émission laser vers la cible : la divergence du faisceau de télémétrie peut donc être réduite. Ce qui a comme avantage d'augmenter l'éclairement de la cible et donc de fournir un écho plus fort. Ainsi il y a un gain sur la sensibilité de la détection de l'écho et un renforcement de l'écho. Il en résulte que pour une même source laser et un même diamètre de l'optique de réception la portée de télémétrie est significativement augmentée.

L'imageur peut en outre fournir des paramètres d'écartométrie de la cible pour permettre une poursuite fine de la cible.

La direction peut être déterminée en mode passif et la première tranche de distances peut être déterminée en mode actif par les sous-étapes suivantes :

- Choix d'une période d'intégration initiale définie par une position temporelle prédéterminée et une durée d'intégration maximale déterminée par le fonctionnement de jour, correspondant à une tranche de distances,

- Balayage d'un domaine de distances prédéterminé par télémétries, à partir de la période d'intégration initiale et dans des périodes d'intégration successives adjacentes de même durée d'intégration, la première période d'intégration pendant laquelle un écho est détecté déterminant la première tranche de distances dans laquelle est située la cible.

La direction et la première tranche de distances peuvent être déterminées simultanément et en mode actif.

Au cours des itérations successives, les périodes d'intégration sont avantageusement établies en prenant en compte un recouvrement prédéterminé lié à une faible sensibilité du détecteur au début de la durée d'intégration.

Lorsque la cible a une vitesse relative, au cours des itérations successives, chaque période d'intégration est de préférence établie en prenant en compte la vitesse relative de la cible.

Selon une caractéristique de l'invention, les variations de la position de la période d'intégration sont obtenues par dichotomies de la position de la période d'intégration au cours des itérations successives, la troisième tranche de distances étant déterminée à partir de la période d'intégration de la dernière itération.

Selon une autre caractéristique de l'invention, la cible a une vitesse relative constante non connue mais comprise entre une vitesse minimale de rapprochement et une vitesse maximale d'éloignement prédéterminées, et la réduction de la deuxième tranche de distances est obtenue au cours des itérations successives avec à chaque télémétrie :

- une variation aléatoire de la position de la période d'intégration selon un sens, le sens de variation s'inversant dès une première absence de détection d'écho suivant une période d'intégration avec détection,
- lorsqu'un écho a été détecté, un enregistrement de la date d'émission de l'impulsion et de la position de la période d'intégration correspondante,
- un calcul d'une droite de vitesse minimale et d'une droite de vitesse maximale à partir des dates et positions enregistrées,
- la vitesse relative de la cible étant comprise entre la pente de la droite de vitesse minimale et la pente de la droite de vitesse maximale, et
- à tout instant, la troisième tranche de distances étant comprise entre la droite de vitesse minimale et la droite de vitesse maximale.

L'invention a aussi pour objet un produit programme d'ordinateur, ledit programme d'ordinateur comprenant des instructions de code permettant d'effectuer les étapes du procédé de mesure de distance d'une cible tel que décrit, lorsque ledit programme est exécuté sur un ordinateur.

L'invention concerne également un système de mesure de distance d'une cible qui comprend :

- un émetteur d'impulsions,
- un détecteur matriciel comportant des mini-détecteurs spatiaux couplés à des condensateurs de durée d'intégration commandée par une polarisation des mini-détecteurs,
- des moyens d'orientation de l'émetteur et du détecteur,
- une unité de traitement apte à synchroniser l'émetteur et le détecteur, à commander les moyens d'orientation et à mettre en œuvre le procédé tel que décrit.

D'autres caractéristiques et avantages de l'invention apparaîtront à la lecture de la description détaillée qui suit, faite à titre d'exemple non limitatif et en référence aux dessins annexés dans lesquels :

la figure 1 représente schématiquement un exemple de système de mesure de distance selon l'invention,
la figure 2 illustre schématiquement la sensibilité d'un détecteur matriciel à condensateur en fonction du temps,
la figure 3 illustre une étape de recherche d'une 1ère grande tranche de distances, du procédé selon l'invention,
la figure 4 illustre une étape de première réduction de la tranche de distances, du procédé selon l'invention,
la figure 5 illustre une étape de deuxième réduction de la tranche de distances, du procédé selon l'invention,
la figure 6 représente une suite de tranches de distances successives, correspondant à des périodes d'intégration de même longueur mais de positions variables, ainsi que la trace de la cible en fonction du temps,
la figure 7 représente la suite de tranches de distances de la figure 6 avec seulement les tranches dans lesquelles la cible a été détectée, ainsi que la trace de la cible en fonction du temps,
la figure 8 reprend la figure 7 en y ajoutant les droites limites dont les pentes sont celle des vitesses maximale et minimale prédéterminées pour chaque période d'intégration, puis la droite dont la pente est la vitesse maximale calculée à l'issue de la mesure lorsque la vitesse maximale prédéterminée n'est plus valide.
la figure 9 reprend la figure 7 en y ajoutant différentes droites dont les pentes sont les vitesses maximales établies au fil du temps,
la figure 10 reprend la figure 7 en y ajoutant les différentes droites dont les pentes sont les vitesses minimales établies au fil du temps,
la figure 11 représente l'évolution au fil du temps, de la vitesse maximale, de la vitesse minimale et de leur moyenne,
la figure 12 représente l'évolution au fil du temps, de la distance maximale projetée, de la distance minimale projetée, de la distance moyenne projetée et la variation de la distance réelle de la cible.

D'une figure à l'autre, les mêmes éléments sont repérés par les mêmes références.

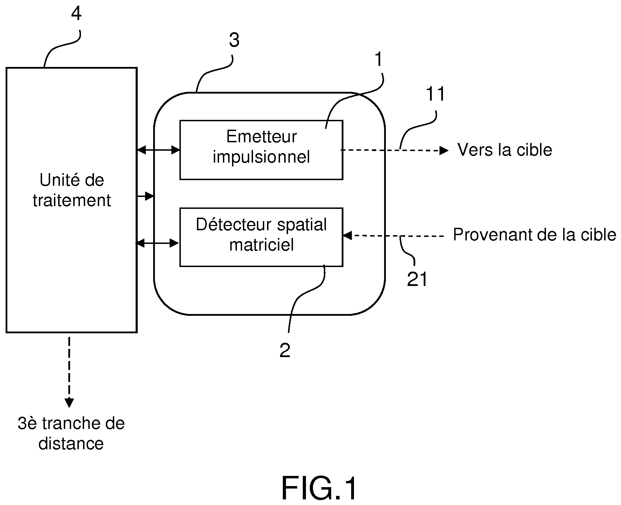

Le système de mesure de distance selon l'invention décrit en relation avec la figure 1, comporte :

- un émetteur 1 d'impulsions laser 11,
- un détecteur matriciel 2 (aussi désigné imageur) permettant la détection spatiale de l'image 21 de la cible en mode passif et/ou des échos 21 de la cible en mode actif,
- un filtre spectral placé devant le récepteur et centré sur la longueur d'onde du laser pour réduire le flux optique de jour et favoriser la détection des échos ; il est éventuellement escamotable,
- des moyens 3 d'orientation de l'émetteur et du récepteur en direction d'une cible à télémétrer ; le champ angulaire dans lequel est la cible est par exemple de l'ordre d'un milliradian,
- une unité de traitement 4 reliée à l'émetteur, au détecteur et aux moyens d'orientation et apte à mettre en œuvre le procédé décrit dans la suite.

La présente invention peut s'implémenter à partir d'éléments matériel et/ou logiciel. Elle peut être disponible en tant que produit programme d'ordinateur sur un support lisible par l'unité de traitement. Le support peut être électronique, magnétique, optique, électromagnétique ou être un support de diffusion de type infrarouge. De tels supports sont par exemple, des mémoires à semi-conducteur (Random Access Memory RAM, Read-Only Memory ROM), des bandes, des disquettes ou disques magnétiques ou optiques (Compact Disk - Read Only Memory (CD-ROM), Compact Disk - Read/Write (CD-R/W) and DVD).

Dans un système de télémétrie classique, la sensibilité du récepteur est optimisée en satisfaisant une bonne précision temporelle de la détection pour obtenir une précision de distance telle qu'une précision métrique pour une cible située à plus de 100m. Le récepteur convertit en électrons la lumière rétrodiffusée par la cible. Ce récepteur est monté dans un circuit transimpédance qui convertit le flux d'électrons en une tension variable. La variation de la tension est représentative de la variation du flux de lumière arrivant sur le récepteur. Ainsi il est possible de détecter précisément la date d'arrivée de l'écho (= impulsion émise par l'émetteur, rétrodiffusée par la cible et arrivant sur le récepteur). La sensibilité est limitée par les bruits du circuit transimpédance. Le bon repérage temporel nécessite une large bande passante de plusieurs MégaHertz. Cette large bande passante est une des principales sources de bruit limitant la sensibilité du récepteur.

Couramment les détecteurs spatiaux sont assemblés en matrice dont les éléments sont des mini-détecteurs spatiaux. Chaque mini-détecteur spatial est couplé à un condensateur. La durée d'intégration des minis détecteurs spatiaux est commandée par la polarisation des mini-détecteurs. Lorsqu'un flux de lumière atteint un mini-détecteur chaque photon est converti en électron(s) qui est (sont) drainé(s) vers le condensateur grâce à la polarisation du mini-détecteur.

Le système de mesure de distance selon l'invention ne comporte pas de récepteur monté en circuit de transimpédance, mais un détecteur matriciel dont les mini-détecteurs spatiaux sont couplés à des condensateurs de durée d'intégration commandée par la polarisation du mini-détecteur.

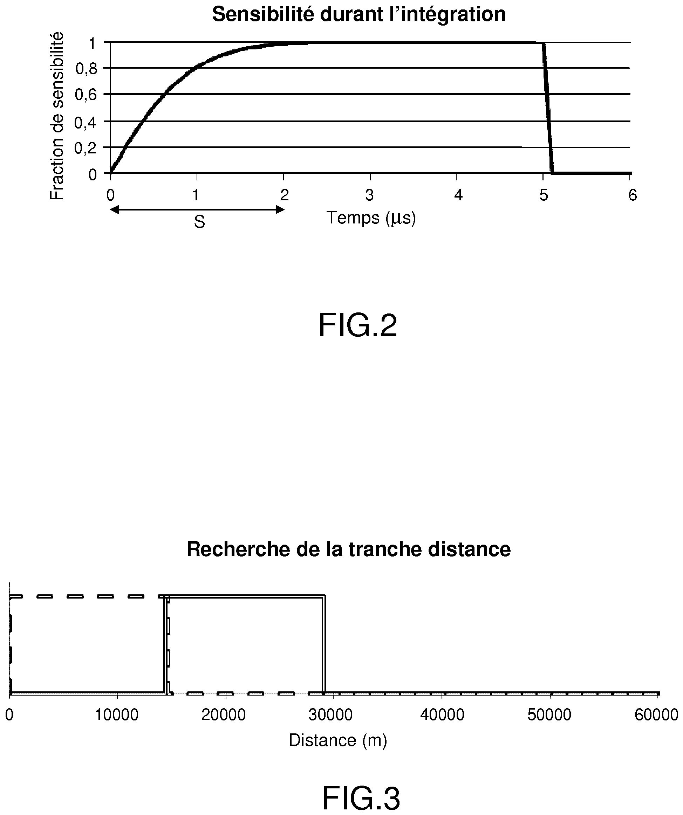

Avec ce détecteur matriciel, le rendement de conversion des photons en électrons n'est pas de un. Il dépend de la technologie des mini-détecteurs. Au début de la période d'intégration, l'efficacité quantique n'est pas à son maximum. Un écho faible peut ne pas être détecté alors que le même écho plus tard par rapport au début de la période d'intégration, sera correctement détecté. Durant l'établissement de la polarisation au début de la durée d'intégration pendant une durée S, la sensibilité des mini-détecteurs n'est donc pas optimale, comme montré figure 2. La durée S de cette moindre efficacité dépend des circuits de détection. Ainsi la durée de la période d'intégration ne peut pas être réduite à des valeurs inférieures à S, en l'occurrence quelques microsecondes dans notre exemple. Ce début de période de détection ne peut pas non plus être négligé car un signal fort bien qu'atténué sera détecté. Un phénomène similaire mais de beaucoup plus courte durée a aussi lieu en fin de période d'intégration.

Eventuellement, on peut aussi tenir compte de la durée totale de l'impulsion émise. L'écho a une largeur temporelle au moins aussi large que celle de l'impulsion émise. Si la sensibilité était uniforme pendant toute la durée de l'intégration il faudrait tenir compte à chaque extrémité d'une intégration partielle de l'impulsion : en effet, une partie de l'énergie de l'impulsion pourrait arriver trop tôt ou trop tard. L'effet est similaire à la réduction de sensibilité au début de la période d'intégration. La durée de recouvrement nécessaire pour tenir compte de la largeur de l'impulsion est typiquement de quatre fois la largeur (temporelle) à mi-hauteur de l'impulsion émise, pour être sûr que l'intégration soit toujours active pendant toute la durée de l'écho.

Une période d'intégration est définie par une durée d'intégration et une position de la période d'intégration relativement à l'émission de l'impulsion laser, telle que par exemple le début de la durée d'intégration.

Dans notre exemple, les effets de variation de sensibilité au début de la période d'intégration et l'effet de la largeur de l'impulsion sont inclus dans les 2 μs de recouvrement.

Pour la description, on prend comme exemple de durée minimale totale de la période d'intégration, 5 μs. Au début de la période d'intégration une portion de 2 μs est réputée être moins sensible.

Puis après la fin de la durée d'intégration, le circuit de lecture du mini-détecteur vide le condensateur pour quantifier le nombre d'électrons. Un phénomène similaire à celui du début S de l'intégration, mais de beaucoup plus courte durée a aussi lieu en fin de période d'intégration. Des phénomènes parasites sont aussi source de bruit.

Le niveau de bruit associé à la détection spatiale peut être beaucoup plus faible que celui associé à la détection temporelle. La sensibilité de la détection spatiale peut donc être nettement meilleure que celle de la détection temporelle. Ceci est la conséquence de la faible résolution temporelle.

Pour profiter de la possibilité de meilleure performance de la détection spatiale par rapport à celle de la détection temporelle, sur des cibles à grande distance typiquement supérieure à 100 m, le procédé selon l'invention n'utilise que la détection spatiale pour fournir une distance et s'applique notamment lorsque le retour fourni par la cible est supposé insuffisant pour que la détection temporelle puisse fonctionner.

Le procédé selon l'invention comprend principalement les étapes suivantes.

A) Détermination de la direction de la cible par rapport à une direction connue des impulsions émises, et d'une première période d'intégration déterminant une première tranche de distances dans laquelle est située la cible,

B) Réduction de la première tranche de distances au cours d'itérations successives de télémétrie par dichotomies de la durée d'intégration et jusqu'à atteindre une durée d'intégration minimale prédéterminée, une deuxième tranche de distances dans laquelle est située la cible, et incluse dans la première tranche de distances, étant déterminée à l'issue de cette étape,

C) Réduction de la deuxième tranche de distances au cours d'itérations successives de télémétrie réalisées par variations de la position de la période d'intégration, avec des durées d'intégration constantes, une troisième tranche de distances dans laquelle est située la cible, et incluse dans la deuxième tranche de distances, étant déterminée à l'issue de cette étape.

La distance de la cible peut varier au cours du temps du fait des vitesses combinées du système et de la cible, ou plus précisément du fait des projections des vecteurs vitesses du système et de la cible sur la droite reliant le système à la cible. En général dans de telles conditions cette vitesse relative n'est pas connue. Pour chaque étape, on considère deux cas.

1. Le cas où la vitesse relative est précisément connue, éventuellement nulle.

2. Le cas où la vitesse relative n'est pas connue précisément mais appartient à un domaine de vitesses connue.

Pour une cible à vitesse relative *Vr* précisément connue :

- Si la cible s'éloigne, sa vitesse relative est positive : d'une impulsion à l'autre la distance augmente.
- Si la cible se rapproche, sa vitesse relative est négative : d'une impulsion à l'autre la distance diminue.

Pour une répétition des impulsions à une fréquence *Fr* (en Hz), d'une impulsion à l'autre, la distance parcourue par la cible, se traduit par un retard additionnel d'arrivée de l'écho. Soit τ ce retard additionnel :

$$\tau = \frac{Vr}{\frac{c}{2} \cdot Fr}$$

Pour une cible à vitesse relative non connue, la cible peut s'éloigner d'une vitesse maximale $V_{max}$ positive. La cible peut aussi se rapprocher d'une vitesse minimale $V_{min}$ négative.

Pour une répétition des impulsions à une fréquence *Fr* (en Hz), d'une impulsion à l'autre, la distance parcourue par la cible, se traduit par un retard complémentaire d'arrivée de l'écho qui se décompose en deux valeurs :

- Le retard μ positif correspondant à l'influence de la vitesse maximale pour une fréquence Fr de répétition des impulsions.

$$\mu = \frac{V_{max}}{\frac{c}{2} \cdot Fr}$$

- L'avance $\gamma$ négative correspondant à l'influence de la vitesse minimale pour une fréquence *Fr* de répétition des impulsions.

$$\gamma = \frac{V_{min}}{\frac{c}{2} \cdot Fr}$$

A chaque itération, $\gamma$ est ajouté au début de l'intégration et $\mu$ est ajouté à la fin de l'intégration. Ce qui correspond à un élargissement de $\mu - \gamma$ de la période d'intégration par rapport à la situation sans vitesse relative de la cible.

La description qui suit détaille chaque étape. L'incidence de la vitesse relative est précisée. La description est illustrée par des exemples.

A) Détermination de la direction de la cible et d'une première tranche de distances.

La télémétrie ne permet pas toujours une détection spatiale de la cible sans l'aide de l'émission, comme c'est généralement le cas de nuit lorsque l'émission propre de la cible n'est pas détectable dans la bande spectrale du détecteur spatial. On différencie donc le fonctionnement sans l'aide de l'émission que l'on désigne par mode passif, du fonctionnement avec l'aide de l'émission que l'on désigne par mode actif. La cible peut avoir une émission propre dans la bande spectrale du détecteur spatial, du fait de sa température pouvant être perçue par la détection spatiale.

Lorsque l'éclairement ambiant ou l'émission propre de la cible sont insuffisants pour permettre une détection passive, la direction de la cible est déterminée en mode actif. Le mode est dit actif lorsque la détection spatiale perçoit la cible éclairée par une impulsion laser. L'émission passive de la cible est faible et la durée d'intégration peut être choisie pour couvrir tout le domaine de distances attendu du système.

La performance en distance dépend de l'orientation de l'axe de l'émission en direction de la cible. De nuit il n'y a pas de limitation du champ des mini-détecteurs (le champ unitaire des mini-détecteurs et la divergence du faisceau émis peuvent être grands), ni de la période d'intégration pour le champ unitaire de la détection spatiale ; cette durée peut correspondre à une tranche de distances de plusieurs dizaines, voire centaines de kilomètres. Une recherche de la présence de la cible en balayant le cône probable de présence de la cible est possible en utilisant une durée d'intégration couvrant tout le domaine de distance couvert par le système de mesure.

Il y a un compromis à faire entre d'une part le champ instantané (divergence) de l'émission et donc de la portée limite, et d'autre part le temps d'exploration par émission d'impulsions successives en direction du champ possible où se trouve la cible.

A l'issue de cette étape et quelle que soit la vitesse relative de la cible, la distance de la cible a été repérée dans une très grande tranche de distances aussi désignée 1ère tranche de distances. Comme indiqué, cette 1ère tranche de distances peut couvrir plusieurs dizaines, voire centaines de kilomètres.

La direction peut être déterminée en mode passif. Le mode est dit passif lorsque la détection spatiale perçoit la cible telle qu'éclairée par l'éclairement ambiant ou par l'émission propre de la cible, c'est-à-dire sans qu'il soit nécessaire de l'éclairer par une impulsion laser. La détection spatiale en mode passif permet de localiser la cible et de fournir aux moyens d'orientation les informations nécessaires à l'alignement de l'axe de l'émission des impulsions sur la cible.

Le but de la détection spatiale en mode passif est d'affiner la poursuite en fournissant une écartométrie précise entre la direction pointée par le système et la perception de la cible par le détecteur spatial 2. Le filtre spectral placé devant le détecteur peut être escamoté pendant le mode passif pour favoriser la détection. S'il n'est pas escamoté la durée d'intégration doit être suffisamment longue pour percevoir la cible avec seulement l'éclairement ambiant et malgré le filtrage spectral. La durée de la période d'intégration peut être de plusieurs millisecondes.

Suite à la détection passive, l'écartométrie de la cible par rapport à la direction de l'émission permet l'ajustement de la direction d'émission de la télémétrie en direction de la cible. L'écartométrie résiduelle doit être plus petite que la divergence d'émission.

La direction de la cible peut aussi être déterminée en mode passif par un autre dispositif dédié à cette fonction et équipant le système, tel qu'un écartomètre spécifique ou une caméra qui devront avoir connaissance de la direction d'émission du télémètre.

La quantification du signal perçu en mode passif par la détection spatiale sert de mesure du flux de fond créé par l'éclairement de la cible par la lumière ambiante du jour ou par l'émission propre de la cible.

La direction de la cible étant ainsi déterminée en mode passif, une première tranche de distances dans laquelle se situe la cible est recherchée en mode actif. En effet, le but de cette détection spatiale en mode actif est dans un premier temps de déterminer de manière grossière la distance de la cible en ayant une détection spatiale dans une période d'intégration prédéterminée.

Dans le cas où la détection de la cible en mode passif est possible, le flux passif collecté pendant la durée de l'intégration maximale correspondant à la portée du système, peut être trop important pour permettre la détection optimale de la cible. Pour cette étape, la durée d'intégration de la détection spatiale est la plus grande possible permettant de discerner l'écho de la cible éclairée par une impulsion, malgré le flux de fond créé par l'éclairement de la cible par la lumière ambiante du jour ou par l'émission propre de la cible. Le flux de fond est un flux continu. Les signaux perçus du flux de fond par les mini-détecteurs spatiaux sont proportionnels à la durée de la période d'intégration. On rappelle en effet que les photons arrivant sur les détecteurs s'accumulent au cours de la période d'intégration. L'écho de la cible (de courte durée) peut alors être noyé dans le signal du fond lorsque la durée d'intégration est trop longue. Il en résulte que l'on distingue l'éclairement ambiant de jour dans lequel l'écho peut rapidement être noyé, du faible éclairement ambiant de nuit dans lequel l'écho peut être détecté sur de très longues durées. La position de la cible sur les détecteurs spatiaux est connue. Le calcul du niveau de flux de fond à ne pas dépasser pour pouvoir détecter avec un taux de fausse alarme et une probabilité de détection donnés, un niveau minimum d'écho de la cible éclairée par l'impulsion, est de l'état de l'art connu. Dans les phases où la durée d'intégration est réduite, le flux de fond détecté sera réduit, et le seuil de détection pourra être diminué tout en conservant le même taux de fausse alarme pour augmenter la probabilité de détection.

Inversement l'écho ne peut pas être détecté s'il est en dehors de la période d'intégration. Un compromis concernant cette période d'intégration (définie par une durée d'intégration et la position de cette durée, le début par exemple) est déterminé en fonction de l'éclairement ambiant, de la sensibilité du détecteur, du bruit de la chaine détection, du niveau minimal de l'écho à détecter, etc.

Comme illustré figure 3, le domaine de distances couvert par le système de mesure va être examiné par tranches de distances d'égales longueurs, cette longueur correspondant à la durée d'intégration « la plus grande possible » indiquée ci-dessus. Le but est de détecter dans quelle tranche de distances est la cible. En fonction de sa distance au télémètre, l'écho de la cible va revenir avec un retard de 6.67128 $\mu$s/km (Aller-retour de la lumière se propageant à 299792458 m/s). Pour des facilités de lecture dans les exemples où il y a présentation simultanée du temps et des distances, 1 $\mu$s représente 150 m de distance au lieu de 149.896229 m dans le vide.

On prend comme exemple une cible située à 15175 m du système. La durée d'intégration la plus longue qui permette néanmoins de discerner l'écho de l'éclairement ambiant, ou dit autrement permettant le discernement actif de la cible, est de 98 $\mu$s ce qui représente une tranche de distances de 14700 m de longueur. Au-delà de cette durée d'intégration, l'écho peut être noyé dans l'éclairement ambiant.

La cible pouvant être menaçante, les tranches de distances successives vont être examinées en distance croissante. Mais le procédé s'applique également en les examinant par distances décroissantes.

Dans le cas où la vitesse relative est nulle, pour assurer une exploration du domaine de distance avec une sensibilité optimale, il faut neutraliser le moment où la sensibilité n'est pas optimale au début S de la période d'intégration.

Voici l'algorithme pour le positionnement de la période d'intégration.

Pour la détermination de la première tranche de distance, le mode actif utilise la même période d'intégration de largeur $P$.

Soit $D_0$ le retard du début de la première période d'intégration correspondant à la distance la plus courte attendue par le système. Soit $F_0$ le retard de la fin de cette première période d'intégration. La période d'intégration a la même largeur (ou durée) P durant cette étape.

$$F_0 = D_0 + P$$

S'il n'y a pas détection et que la distance maximale du système n'est pas atteinte, une nouvelle période d'intégration est positionnée pour l'impulsion suivante. Il faut tenir compte de la durée de moindre sensibilité du début de la période d'intégration S.

$$D_1 = F_0 - S$$
$$F_1 = D_1 + P$$

$$\dots$$

$$D_i = F_{i-1} - S$$
$$F_i = D_i + P$$

Ce processus est continué jusqu'à ce qu'il y ait une détection ou que la retard correspondant à la distance maximale soit atteint. Dans ce cas la cible n'est momentanément pas détectable et le processus est repris depuis le début.

Dès qu'il y a une détection dans une période d'intégration, une nouvelle étape est commencée.

Comme indiqué précédemment, la détection spatiale est moins sensible au début de la durée d'intégration pendant une durée $S$ ; dans notre exemple, il s'agit des 2 premières $\mu$s ($S$ = 2 $\mu$s).

Les périodes d'intégrations successives doivent donc de préférence se recouvrir de cette durée S, ce qui correspond pour les tranches de distances successives à un recouvrement de longueur $Ls$ ($S$ = 2 $\mu$s → $Ls$ = 300 m dans notre exemple).

La position de la première période d'intégration est prédéterminée par le système : lorsqu'il n'est pas attendu de cible à télémétrer à très courte distance la première tranche de distances peut ne pas commencer à 0 m mais à quelques dizaines ou centaines de mètres suivant les applications. Dans notre exemple, la détection commence avec une période d'intégration débutant à t = 0.

Il n'y a pas de détection d'écho dans cette première période d'intégration qui correspond à une première tranche de distances de 0 à 14700 m, représentée figure 3 avec des tirets. Il n'y a pas lieu de tenir compte de la plus faible sensibilité pendant les 2 $\mu$s de début de la période d'intégration car si la cible est à moins de 300 m l'écho sera fort.

Suite à la deuxième émission d'une impulsion, la période d'intégration commence avec un retard de 96 $\mu$s (= 98 $\mu$s - 2 $\mu$s). En effet, pour garantir une recherche de la cible avec la pleine sensibilité, les S premières secondes ($S$ = 2 $\mu$s) de la période se recouvrent avec la fin de la période d'intégration précédente. Ceci correspond à un recouvrement $Ls$ de 300 m. Cette période d'intégration correspond à la tranche de distances de 14400 m (= 14700 - 300) à 29100 m (= 14400 + 14700). Dans notre exemple un écho est détecté dans cette période d'intégration puisque la cible est à 15175 m : la cible est donc dans la tranche de distances correspondante.

En télémétrie il y a couramment deux types de logique suivant la nature des cibles recherchées : soit une logique premier écho, soit une logique dernier écho. Selon l'invention basée sur un imageur qui permet la détection, le profil de ce qui a contribué à la détection est disponible. Soit ce qui est détecté dans la tranche de distances, est ce qui est attendu et dans ce cas il n'y a pas lieu de rechercher dans d'autres tranches distances. Soit ce qui est détecté, n'est pas ce qui est attendu et dans ce cas le procédé se poursuit pour les tranches suivantes toutes de même longueur (14700 m dans notre exemple) suivant le même principe que précédemment décrit : la 3è tranche de distances couvrira les distances comprises entre 28800 m (= 29100 - 300) et 43500 m (= 28800 + 14700), etc, jusqu'à ce qu'un écho soit détecté dans une tranche de distances ou que la limite de portée du système soit atteinte.

A l'issue de cette étape, la cible a été repérée dans une grande tranche de distances aussi désignée 1<sup>ère</sup> tranche de distances. Il s'agit dans notre exemple de la tranche de distances comprise entre 14400 m et 29100 m.

Lorsque la vitesse de la cible est précisément connue. Il faut aussi prendre en compte le retard additionnel $\tau$.

Pour la détermination de la première tranche de distance, le mode actif utilise la même période d'intégration de largeur $P$.

Soit $D_0$ le retard du début de la première période d'intégration correspondant à la distance la plus courte attendue par le système. Soit $F_0$ le retard de la fin de cette première période d'intégration. La période d'intégration a la même largeur $P$ durant cette étape.

$$F_0 = D_0 + P$$

S'il n'y a pas détection et que la distance maximale du système n'est pas atteinte, une nouvelle période d'intégration est positionnée pour l'impulsion suivante. Il faut tenir compte de la durée de moindre sensibilité du début de la période d'intégration S.

$$D_1 = F_0 - S + \tau$$

$$F_1 = D_1 + P$$

Ce processus est continué jusqu'à ce qu'il y ait une détection ou que la retard correspondant à la distance maximale soit atteint. Dans ce cas la cible n'est pas momentanément détectable et le processus est repris depuis le début.

Lorsque la vitesse de la cible n'est pas précisément connue, il faut aussi prendre en compte le domaine de vitesse possible.

Soit $D_0$ le retard du début de la première période d'intégration correspondant à la distance la plus courte attendue par le système. Soit $F_0$ le retard de la fin de cette première période d'intégration. La période d'intégration a la même largeur $P + \mu - \gamma$ durant cette étape.

$$F_0 = D_0 + P + \mu - \gamma$$

S'il n'y a pas détection et que la distance maximale du système n'est pas atteinte, une nouvelle période d'intégration est positionnée pour l'impulsion suivante. Il faut tenir compte de la durée de moindre sensibilité du début de la période d'intégration $S$.

$$D_i = F_{i-1} - S + \gamma$$

$$F_i = D_i + P + \mu - \gamma$$

Ce processus est continué jusqu'à ce qu'il y ait une détection ou que la retard correspondant à la distance maximale soit atteint. Dans ce cas la cible n'est pas momentanément détectable et le processus est repris depuis le début.

Dès qu'il y a une détection dans une période d'intégration, une nouvelle étape (étape B) est commencée. La première tranche de distance est connue correspondant au domaine couvert par la période de détection. La première tranche de distance correspond à la période de détection s'étendant de $D_{i-1}$ à $F_{i-1}$.

A l'issue de cette étape, la cible a été repérée dans une grande tranche de distances aussi désignée 1ère tranche de distances.

B) Première réduction de la tranche de distances dans laquelle se situe la cible, par dichotomies de la durée d'intégration.

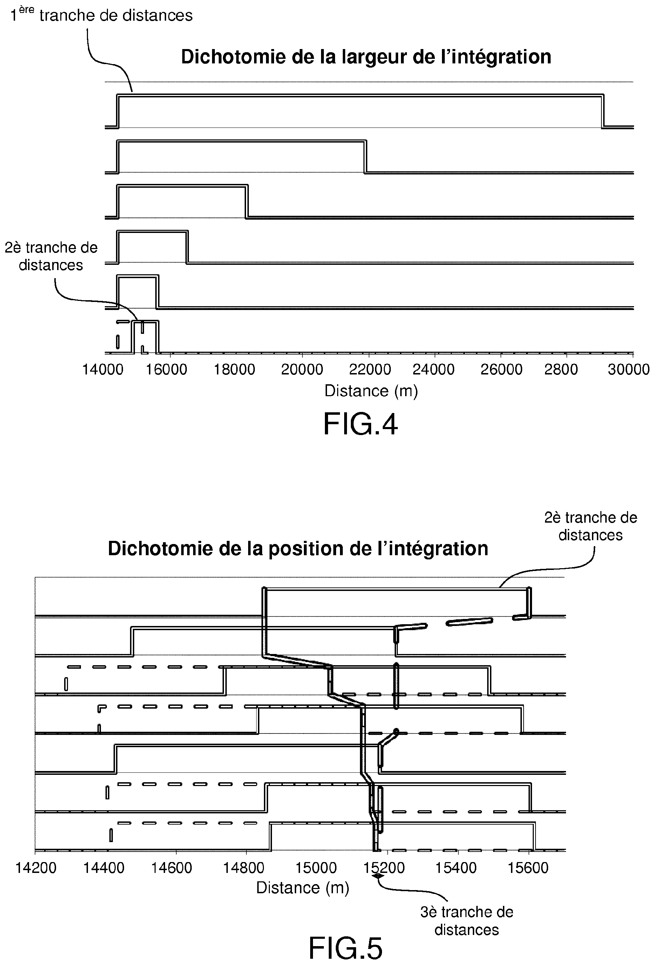

Cette étape va permettre d'affiner la distance de la cible au sein de cette 1ère tranche, en réduisant la durée de la période d'intégration tout en vérifiant que l'écho de la cible est bien présent, comme illustré figure 4.

Une dichotomie de la durée de la période d'intégration va permettre de la réduire jusqu'à une durée minimale prédéterminée permise par la technologie du détecteur et par les moyens de synchronisation de l'émission et du retard de la période d'intégration.

On considère d'abord une vitesse relative nulle.

Dans le principe, après que la détection de l'écho ait eu lieu dans une période d'intégration avec un retard donné, la prochaine télémétrie est réalisée avec le même retard pour le début de l'intégration (de préférence ajusté pour prendre en compte la durée S de faible sensibilité) mais avec une durée d'intégration réduite de moitié : cela correspond à la 1ère moitié (de préférence ajustée) de la 1ère tranche de distances. S'il n'y a pas détection d'écho pendant cette durée d'intégration, la télémétrie suivante est réalisée sur l'autre moitié de cette période d'intégration initiale, qui correspond à la 2è moitié de la 1ère tranche. Dans notre exemple un écho est détecté dans la première moitié de la période d'intégration.

Cette dichotomie est réitérée en diminuant de moitié la durée (ou environ la moitié comme on va le préciser plus loin) de la période d'intégration précédente, à chaque itération ; lorsqu'un écho de la cible est détecté dans la première moitié, on passe à l'itération suivante comme c'est le cas pour les 4 premières itérations de la figure 4, sinon on vérifie qu'on obtient un écho dans l'autre moitié avant de passer à l'itération suivante comme c'est le cas pour la 5è itération de la figure 4. Ainsi par itérations successives, la largeur de la durée d'intégration est réduite et la période d'intégration correspondante est retenue dans la mesure où un écho de la cible y est détecté. La longueur de la tranche distance est finalement étroite.

De préférence, on tient compte du début S de la période d'intégration pendant lequel la détection spatiale est moins sensible.

La précédente détection avait lieu pour une période d'intégration de 98 μs de large commençant avec un retard

de 96 μs sur l'émission de l'impulsion. Dans notre exemple, cette période d'intégration correspond à la tranche de distances de 14400 à 29100 m.

La première division de la durée d'intégration *DI* est réalisée avec une durée d'intégration de 50 μs commençant avec le même retard que précédemment soit 96 μs après l'émission de l'impulsion.

Les durées d'intégration $DI_i$ successives se calculent de la manière suivante en tenant compte du recouvrement nécessaire :

$$DI_i = \frac{(DI_{i-1} + S)}{2}$$

La position de la période d'intégration *i+1* est calée de la manière suivante :

A la ième itération un premier test de détection s'étend de $D_i$ à $F_i$, et s'il n'y a pas de détection, un deuxième test est fait avec une itération s'étendant de $K_i$ à $L_i$. Les itérations des deux tests se recouvrent de la durée S de plus faible sensibilité.

Pour le premier essai de télémétrie i = 0

$$D_i = D_{i-1}$$

$$F_i = D_i + DI_i$$

S'il y a détection à ce premier test, la nouvelle tranche dans laquelle est la cible est :

Début : $Td_i = D_i$    Fin : $Tf_i = F_i$

S'il n'y a pas détection au premier test, un deuxième test est fait pour cette itération.

Le début de l'intégration a lieu à

$$K_i = F_i - S \text{ et } L_i = K_i + DI_i$$

Le calcul de la nouvelle tranche localisant la cible tient compte de la non détection dans le premier test de cette itération.

Début $Td_i = F_i$    Fin : $Tf_i = L_i$

Ainsi la largeur de la tranche de distances se réduit à chaque itération de moitié.

Lorsqu'il s'agit de la première « moitié » de la période *i,* le début de la période *i+1* = le début de la période *i,* ou dit autrement la limite inférieure de la tranche de distances *i+1* = la limite inférieure de la tranche de distances i ;

Lorsqu'il s'agit de la deuxième « moitié » de la période *i,* la fin de la période *i+1* = la fin de la période *i,* ou dit autrement la limite supérieure de la tranche de distances *i+1* = la limite supérieure de la tranche de distances i.

Dans notre exemple, avec un recouvrement de 2 μs, les largeurs de durée d'intégration successives sont : 98, 50, 26, 14, 8 et 5 μs. La durée de l'intégration ne peut pas être réduite infiniment. Car comme précédemment expliqué il y a des limitations physiques au niveau de l'imageur et il y a aussi l'effet de la largeur temporelle de l'impulsion émise.

Dans notre exemple avec une cible à 15175 m, la dichotomie de la largeur de la durée d'intégration pour les valeurs indiquées ci-dessus correspond aux tranches de distances :

de 14400 à 29100 m, de longueur 14700 m,
de 14400 à 21900 m, de longueur 7500 m,
de 14400 à 18300 m, de longueur 3900 m,
de 14400 à 16500 m, de longueur 2100 m,
de 14400 à 15600 m, de longueur 1200 m,
de 14400 à 15150 m, de longueur 750 m, mais il n'y a pas détection d'écho, donc la tranche suivante est
de 14850 à 15600 m de même longueur 750 m et calée sur la limite supérieure de la tranche de distances précédente (14400 - 15600 m).

La représentation graphique est montrée figure 4 : la tranche de distances lorsqu'il n'y a pas de détection est tracée en pointillée.

Selon une alternative, on peut réaliser ces dichotomies en considérant la 2è moitié, avant la 1ère moitié.

A l'issue de cette étape B avec une vitesse relative nulle, la cible est localisée dans une tranche de distances dite 2è tranche de distances, incluse dans la 1ère tranche de distances et plus étroite que celle-ci.

Dans le cas où la vitesse relative est connue, la durée d'intégration *DI* évolue de la même manière.

$$DI_i = \frac{(DI_{i-1} + S)}{2}$$

Mais à chaque itération les débuts et fins d'intégration glissent du fait de la vitesse.

$$D_i = D_{i-1} + \tau$$

$$F_i = D_i + DI_i$$

S'il y a détection à ce premier test, la nouvelle tranche dans laquelle est la cible est :

$$\text{Début} : Td_i = D_i \quad \text{Fin} : Tf_i = F_i$$

S'il n'y a pas détection au premier test, un deuxième test est fait pour cette itération.

Le début de l'intégration a lieu à

$$K_i = F_i - S + \tau \text{ et } L_i = K_i + DI_i$$

Le calcul de la nouvelle tranche localisant la cible tient compte de la non détection dans le premier test de cette itération.

$$\text{Début } Td_i = F_i + \tau \quad \text{Fin} : Tf_i = L_i$$

Ainsi la largeur de la tranche de distances se réduit à chaque itération de moitié.

Lorsque la vitesse de la cible n'est pas précisément connue, il faut aussi prendre en compte le domaine de vitesses possible.

$$DI_i = \frac{(DI_{i-1} + S + 2 \cdot (\mu + \gamma))}{2}$$

Au premier test

$$D_i = Td_{i-1} + \gamma$$

$$F_i = D_i + DI_i$$

S'il y a détection à ce premier test, la nouvelle tranche dans laquelle est la cible est :

$$\text{Début} : Td_i = D_i \quad \text{Fin} : Tf_i = F_i$$

S'il n'y a pas détection au premier test, un deuxième test est fait pour cette itération.

$$K_i = F_i - S + \mu \text{ et } L_i = K_i + DI_i$$

Début $Td_i = F_i + \mu$    Fin : $Tf_i = L_i$

Le processus de réduction de largeur de la période d'intégration s'arrête quand la largeur minimale de la fenêtre prévue pour le système est atteinte.

A l'issue de cette étape B avec une vitesse relative non nulle, la cible est localisée dans une tranche de distances dite 2è tranche de distances, incluse dans la 1ère tranche de distances et plus étroite que celle-ci.

On va illustrer par un exemple ce cas de première réduction de la tranche de distances de la cible à vitesse relative, par dichotomies de la durée d'intégration.

Une 1ère tranche de distances a été déterminée à l'issue de l'étape A, en introduisant un recouvrement supplémentaire lié à la vitesse comme on vient de le décrire.

On considère dans notre exemple qu'il y a eu détection dans la tranche de distances de 39030 m à 78030 m (= 1ère tranche de distances) soit une intégration couvrant les retards de 260.2 μs à 520.2 μs. Comme pour une cible à distance fixe, au fil des itérations, la tranche de distances est découpée en demi-tranches, en tenant compte de la durée d'obtention de la pleine performance lors de l'intégration. Mais comme cette fois la cible a une vitesse relative, le découpage en deux demi-tranches de distances tient également compte de cette vitesse. Ainsi pour rester avec des demi-tranches équilibrées, l'effet du recouvrement nécessaire à cause de la vitesse non connue de la cible en rapprochement ou en éloignement, et de la durée d'obtention de la pleine performance lors de l'intégration est partagé entre les deux demi-tranches. Soit M le milieu recherché de la tranche précédente de durée D. La première demi-tranche doit commencer plus tôt de 0.8 μs pour tenir compte de la possibilité de rapprochement de la cible et se terminer en M. S'il n'y a pas de détection le début de l'autre demi-tranche doit commencer 2.8 μs plus tôt que M pour masquer les 2 μs de moindre sensibilité et tenir compte de la possibilité que la cible soit en rapprochement. La fin de cette demi-tranche doit être la fin de la tranche de dernière détection, augmentée de 2 fois 0.2 μs pour tenir compte de la vitesse d'éloignement de la cible depuis la dernière détection.

La tranche de durée D se décompose donc en deux demi-tranches de même durée : (D + 0.8 + 2.8 + 0.4) / 2 = (D + 4) / 2=D / 2 + 2.

La durée de ces demi-tranches est donc augmentée de 2 μs (600 m) dans notre exemple.

Pour l'impulsion suivante, la première demi-tranche considérée sera la plus proche. La cible s'est déplacée. Le fait que l'écho puisse être fort au début de la période d'intégration où il est intrinsèquement faible, est déjà pris en compte dans le début de la période d'intégration (à 259.2 μs dans notre exemple). L'intégration de durée moitié doit prendre en compte l'aspect vitesse. Pour prendre en compte ces phénomènes et rester avec des demi-tranches équilibrées,

- le début de la période d'intégration est à 260.2 - 0.8 = 259.4 μs (39030 - 120= 38910m).
- la durée prévue est de 260 / 2 + 2 = 132 μs (39000 2 + 300 = 19800 m).
- la fin de la période est à 259.4 + 132 = 391.4 μs (38910 + 19800 = 58710 m).

S'il y a détection le même raisonnement est fait pour un nouveau découpage de la durée de l'intégration, avec
• un début d'intégration à 259.4 - 0.8 = 258.6 μs (38910 - 120 = 38790m)
• une durée d'intégration de 132 / 2 + 2 = 68 μs (19800 / 2 + 300 = 10200 m),
• une fin d'intégration à 258.6 + 68 = 326.6 μs (38910 + 10200 = 49110 m).

|  | Début tranche | Fin de tranche | Largeur de tranche | Détection |
|---|---|---|---|---|
| 1er | 39030 m | 78030 m | 39000 m | Oui |
| 2ème | 38910 m | 58710 m | 19800 m | Oui |
| 3ème | 38790 m | 48990 m | 10200 m |  |

S'il n'y a pas détection, le début de la période suivante doit être calé sur la fin de la période précédente avancée des 2 μs de moindre sensibilité et de 0.8 μs pour prendre en compte la vitesse maximale de rapprochement de la cible soit :

$$391.4 - 0.8 - 2 = 388.6 \text{ μs} (58710 - 120 - 300 = 58290 \text{ m}).$$

Pour la fin de la période d'intégration, on prend en compte la vitesse relative de la cible sous forme d'un éloignement, soit 300 m/s entre 3 impulsions successives (il n'y a pas eu de détection pour la 2è impulsion) à 10Hz, soit 60 m ou +0.4 μs ; ainsi la fin sera 520.2 + 0.4 = 520.6 μs (78030 + 60 = 78090m).

|  | Début tranche | Fin de tranche | Largeur de tranche | Détection |
|---|---|---|---|---|
| 1er | 39030 m | 78030 m | 39000 m | Oui |
| 2ème | 38910 m | 58710 m | 19800 m | Non |
| 3ème | 58290 m | 78090 m | 19800 m | Oui |

La subdivision suite à cette troisième impulsion se fait ensuite comme précédemment.

Ainsi les durées d'intégration vont se réduire par dichotomies successives avec les règles de réduction précisées ci-dessus. On obtient dans notre exemple, les durées d'intégration : 260, 132, 68, 36, 20, 12, 8, 6, 5 μs.

Par ce procédé de dichotomie la connaissance de la position de la cible dans une tranche de distances assez étroite est possible. Mais la durée d'intégration ne peut pas être réduite à des durées très courtes. D'une part l'incertitude de la vitesse de la cible impose une largeur minimale d'un test de détection à l'autre. D'autre part comme pour une cible à distance fixe, les caractéristiques de la détection spatiale ne permettent pas de descendre au-dessous d'une durée minimale pour avoir la meilleure efficacité. On peut avoir par exemple une durée de 2 x (0.8 + 0.2) μs à cause de la vitesse possible de la cible et de 2 μs pour atteindre l'efficacité de détection maximale. Dans cet exemple on choisit une durée minimale de durée d'intégration de 5 μs (> 2 + 2 μs), soit une longueur de tranche de distances de 750 m.

A l'issue de cette étape de première réduction, la cible à vitesse relative est localisée dans une tranche de distances plus étroite que la 1ère tranche de distances, dite 2è tranche de distances.

C) Deuxième réduction de la tranche de distances dans laquelle se situe la cible, par dichotomies de la position de la période d'intégration.

Maintenant il n'est plus possible de réduire la largeur de la période d'intégration. Le procédé s'appuie sur un glissement contrôlé de la position de la période d'intégration relativement au moment de l'émission de l'impulsion laser.

Pendant cette étape, la durée de l'intégration est fixe et égale au minimum de durée d'intégration retenu à l'issue de l'étape précédente.

Quand la vitesse relative est précisément connue et éventuellement nulle, l'affinage de la connaissance de la tranche de distances se fait comme suit.

$$F_i = Td_{i-1} + \frac{(Tf_{i-1} - DTd_{i-1})}{2} + \tau$$

$$D_i = F_i - P$$

S'il y a détection à ce premier test, la nouvelle tranche dans laquelle est la cible est :

Début : $Td_i = Td_{i-1}$     Fin : $Tf_i = F_i$

S'il n'y a pas détection au premier test, un deuxième test est fait pour cette itération.

$$K_i = F_i - S + \tau \text{ et } L_i = K_i + P$$

Et la nouvelle tranche est

Début : $Td_i = F_i + \tau$     Fin : $Tf_i = Tf_{i-1} + 2 \cdot \tau$

Le principe de cette étape est de décaler le début de l'intégration par itérations successives. Pour ne pas être limité par la portion S à moindre efficacité qui est représentée en début de la durée d'intégration (soit la partie gauche sur l'exemple), celle-ci est prise en compte pour déterminer la position de la période d'intégration.

A partir de la position de la période d'intégration correspondant à la 2è tranche de distances, cette position est avancée (elle débute plus tôt) de la moitié de la largeur totale, bien qu'on sache que l'écho ne se trouvera pas dans la 1ère moitié de cette période d'intégration ainsi décalée.

S'il y a détection, la cible est donc localisée dans une tranche de distances en fait moitié (de préférence au recouvrement près) moins large que celle qu'on avait avec la 2è tranche de distances. En effet s'il y a détection, elle est donc dans la 1ère moitié (de préférence au recouvrement près) de la 2è tranche de distances. La période d'intégration suivante est alors avancée mais de la moitié (de préférence au recouvrement près) du décalage précédent.

S'il n'y a pas détection, c'est que la cible se situe dans l'autre moitié (de préférence au recouvrement près) de la 2è tranche de distances. Mais l'affinage de la distance de la cible ne s'appuie que sur des détections effectives. Si suite à l'émission d'une impulsion il n'y a pas de détection, on ne peut affirmer que la cible est présente dans la fenêtre d'intégration complémentaire (l'autre moitié) car la ligne de visée peut être moins bien pointée sur la cible ou l'écho est dans le début de la période d'intégration où la détection est moins efficace. On va vérifier. La période d'intégration est donc retardée pour couvrir la 2è moitié (de préférence au recouvrement près) de la 2è tranche de distances, avec un recouvrement introduit afin que la portion d'intégration moins efficace se superpose à la durée d'intégration précédente. Ainsi le domaine possible de présence de la cible est entièrement couvert avec la sensibilité maximale.

A l'issue de cette première dichotomie de la position de la période d'intégration, la cible est alors localisée dans une tranche de distances divisée par deux (de préférence au recouvrement près) par rapport à la 1ère tranche de distances.

Au fil des dichotomies successives de la position, la longueur de la tranche de distances dans laquelle la cible est localisée, est à chaque fois divisée par deux (de préférence au recouvrement près).

Dans notre exemple cette durée minimale est de 5 $\mu$s. Avec une vitesse relative nulle, on obtient le tableau suivant des télémétries successives traduites en distances, également illustré figure 5 et dans lequel la 1è tranche de distances héritée de l'étape précédente est désignée télémétrie initiale :

| télémétrie | début intégration | fin intégration | détection | début tranche distance | fin tranche distance | longueur de la tranche distance |
|---|---|---|---|---|---|---|
| initiale | | | | 14850 | 15600 | 750 |
| 1 | 14475 | 15225 | oui | 14850 | 15225 | 375 |
| 2 | 14287.5 | 15037.5 | non | | | |
| 2 bis | 14737.5 | 15487.5 | oui | 15037.5 | 15225 | 187.5 |
| 3 | 14381.3 | 15131.3 | non | | | |
| 3 bis | 14831.3 | 15581.3 | oui | 15131.3 | 15225 | 93.7 |
| 4 | 14428.1 | 15178.1 | oui | 15131.3 | 15178.1 | 46.8 |
| 5 | 14404.7 | 15154.7 | non | | | |
| 5 bis | 14854.7 | 15604.7 | oui | 15154.7 | 15178.1 | 23.4 |
| 6 | 14416.4 | 15166.4 | non | | | |
| 6 bis | 14866.4 | 15616.4 | oui | 15166.4 | 15178.1 | 11.7 |
| 7 | 14422.3 | 15172.3 | non | | | |
| 7 bis | 14872.3 | 15622.3 | oui | 15172.3 | 15178.1 | 5.8 |

Pour une cible à vitesse relative non connue, le procédé de mesure de distance est semblable à celui précédemment décrit en introduisant cependant un élargissement représentatif du domaine de vitesses possible de la cible. La première tranche de distance correspondait à la période de détection s'étendant de $D_{i-1}$ à $F_{i-1}$.

A la ième itération un premier test de détection s'étend de $D_i$ à $F_i$, et s'il n'y a pas de détection, un deuxième test est fait avec une itération s'étendant de $K_i$ à $L_i$. Les itérations des deux tests se recouvrent de la durée S de plus faible sensibilité.

Le but est de resserrer la tranche de distances où se trouve la cible. La durée minimale de la période est P.

$$F_i = D_{i-1} + \frac{(Tf_{i-1} - D_{i-1} + \mu)}{2}$$

$$D_i = F_i - P$$

S'il y a détection à ce premier test, la nouvelle tranche dans laquelle est la cible est :

$$\text{Début :} \quad Td_i = Td_{i-1} \quad \text{Fin :} \; Tf_i = F_i$$

S'il n'y a pas détection au premier test, un deuxième test est fait pour cette itération.

Le début de l'intégration a lieu à

$$K_i = F_i - S + \gamma \text{ et } L_i = K_i + P$$

Le calcul de la nouvelle tranche localisant la cible tient compte de la non détection dans le premier test de cette itération.

$$\text{Début } Td_i = F_i + \gamma \quad \text{Fin } Tf_i = Tf_{i-1} + 2 \cdot \mu$$

Ainsi la largeur de la tranche de distances se réduit à chaque itération. Mais cette réduction est limitée par le domaine de vitesses.

On a décrit cette étape en avançant la position de la période d'intégration lorsqu'on passe à l'itération suivante. Selon une alternative cette étape peut se dérouler en reculant cette position.

La cible peut se rapprocher ou s'éloigner. Avec une vitesse de rapprochement maximale supposée de $V_{min}$ = - 1200 m/s par exemple, pour une durée prédéterminée (fréquence de répétition) de 100 ms par exemple entre deux impulsions lasers, la cible se sera rapprochée de 120 m : un recouvrement d'au moins $\gamma$ = - 0.8 $\mu$s est nécessaire. La cible peut aussi s'éloigner avec une vitesse maximale supposée de $V_{max}$ = 300 m/s par exemple ; alors un recouvrement de $\mu$ = 0.2 $\mu$s correspondant à une distance de 30 m est nécessaire.

Le positionnement de la période d'intégration tient compte aussi de l'efficacité de détection en fonction de la position de l'écho dans la période d'intégration et si nécessaire de la largeur d'impulsion de l'émission et des bruits de synchronisation.

Pour faciliter la lecture des exemples, les périodes d'intégration sont traduites en équivalent distances.

Par exemple la première tranche de distances va de 450 m à 39450 m, soit une période d'intégration de 260 $\mu$s recouvrant les retards par rapport à l'émission du télémètre de 3 $\mu$s à 263 $\mu$s. La détection spatiale recherche si le niveau des signaux est au-dessus d'un seuil prédéterminé pour détecter la présence de la cible.

Pour la première période d'intégration il n'y a pas lieu de tenir compte de la durée S de plus faible sensibilité des détecteurs car l'écho fourni par une cible à courte distance est fort.

S'il n'y a pas de détection pendant cette période, pour l'émission de l'impulsion suivante la position de la période d'intégration va être décalée pour couvrir la tranche de distances suivante, en tenant compte des vitesses supposées de la cible entre les impulsions avec détection.

Par exemple pour la tranche suivante, l'intégration devra être active de : 263 - 0.8 - 2 = 260.2 $\mu$s (39450 - 120 - 300 = 39030m, où les - 0.8$\mu$s (- 120 m) tiennent compte de la possibilité de rapprochement à 1200 m/s en 0.1 s et les 2 $\mu$s (300 m) de la durée S de moindre sensibilité qu'il faut masquer),
à :

$$\text{à :} \quad 260.2 + 259 = 519.2 \text{ µs (77880m).}$$

S'il n'y a toujours pas de détection, une nouvelle tranche de distances plus éloignée est positionnée suivant le même principe.

Tout au long de ce procédé de mesure tel que décrit, le maintien de la direction d'émission des impulsions en direction de la cible est critique, et d'autant plus lorsque la cible a une vitesse relative. Des détections spatiales en mode passif par le même détecteur peuvent être faites entre les détections spatiales en mode actif, pour aider à l'orientation de la ligne de visée. De plus s'il y a détection, une optimisation de la direction peut être faite en centrant l'émission sur la zone de la cible ayant la plus forte contribution pour l'écho. Une déconvolution avec la distribution spatiale de l'éclairement au niveau de la cible permet d'affiner l'alignement. La connaissance de l'écart d'alignement perçu entre la détection passive et la détection active enrichit la précision de l'écartométrie pour la poursuite suite à une détection en mode passif.

Si la cible n'est pas petite, ce mode peut être utilisé pour avoir une meilleure description spatiale de la cible en faisant un balayage en direction autour de la première détection.

La surveillance de la direction de pointé relativement à un repère fixe permet au système de rester pointé sur la cible.

On propose deux manières d'affiner la distance, par dichotomies de la position de l'intégration ou par tirage aléatoire de la position de l'intégration.

C1 : Deuxième réduction par dichotomies de la position de l'intégration.

Comme déjà indiqué, l'affinage de la distance de la cible ne s'appuie que sur des détections effectives.

Pour chaque impulsion le retard effectif de la période d'intégration est précisément mesuré.

Suite à la dernière détection de l'étape de première réduction, il peut être prédit dans quelle période sera la cible en tenant compte du domaine de vitesses possible. Comme pour la cible à distance fixe, cette période est partagée en deux. La période suivante ne couvrira qu'une des deux moitiés. Le fait que le début de la période d'intégration soit moins efficace doit être pris en compte pour éviter de manquer la cible et risquer de la perdre.

Par exemple la dernière détection a eu lieu pour une période s'étendant de 270 à 275 $\mu$s de retard sur le moment de l'émission de l'impulsion.

Pour l'impulsion suivante la cible peut être dans l'intervalle

270 - 0.8 = 269.2 $\mu$s et 275 + 0.2 = 275.2 $\mu$s soit 6$\mu$s de large.

Pour affiner la distance, les 6 $\mu$s d'écart sont partagés en deux. La période de détection est positionnée de 267.2 à 272.2 $\mu$s.

S'il y a détection, la cible est donc dans la tranche commune entre ce qui était possible [269.2 - 275.2] et ce qui est testé [267.2 - 272.2], soit la nouvelle tranche [269.2 - 272.2].

S'il n'y a pas détection, on suppose que la cible est dans la partie complémentaire [272.2 - 275.2]. A l'impulsion suivante, cette partie complémentaire où devrait être la cible devient [271.4 - 275.4]. Un test de détection est fait [268.4 - 273.4]

S'il y a détection, la cible est donc dans la partie commune [271.4 - 273.4]

S'il n'y a pas détection, on suppose que la cible est dans la partie complémentaire [273.4 - 275.4].

Quand la vitesse relative de la cible n'est pas connue, le processus converge lentement à cause de l'élargissement à chaque étape de la zone probable où est la cible qui entre en compétition avec la division de la largeur de la zone probable. Ce processus ne permet pas d'accéder à une connaissance fine de la distance à mieux que l'élargissement à chaque étape. Dans l'exemple la connaissance est limitée à 1 $\mu$s soit 150 m.

Une alternative est proposée pour affiner la distance et en outre connaître la vitesse relative de la cible.

C2 : Deuxième réduction par tirage aléatoire de la position de la période d'intégration.

Comme déjà indiqué, il n'est pas possible de réduire au-delà d'une certaine valeur la durée d'intégration pour améliorer la connaissance de la distance. Mais aussi l'incertitude de la vitesse relative de la cible impose une largeur minimale pour conserver des détections assez souvent, sinon la cible est perdue.

Le principe de cette étape est d'accumuler plusieurs détections dont le retard de la période d'intégration est variable. Après chaque détection, le traitement compare la position précise de la période d'intégration avec les précédentes. Le traitement fournit une estimation du domaine de distances et de vitesses de la cible. Ces estimations deviennent de plus en plus précises au fil des détections.

Le principe d'accumulation des détections s'appuie sur une variation aléatoire du retard de la période d'intégration par rapport à l'émission des impulsions.

Pour chaque impulsion émise, le pas de la variation aléatoire est obtenu par le produit de la durée de la période d'intégration par un nombre aléatoire compris entre 0 et 1. Il y a un nouveau tirage d'un nombre aléatoire pour chaque nouveau pas. La suite des nombres aléatoires peut être préenregistrée. La valeur moyenne du pas de la variation aléatoire est la moitié de la durée de la période d'intégration. Pour que la cible ne s'échappe pas, cette valeur moyenne du pas traduite en distance multipliée par la fréquence de répétition doit être supérieure à la valeur absolue des hypothèses de vitesses extrémales de la cible.

A partir de la dernière détection de l'étape de première réduction, pour l'impulsion suivante le retard de la période d'intégration est égal au retard précédent diminué du premier pas aléatoire. S'il y a détection, l'évolution du retard est dans le même sens soit une diminution du retard du deuxième pas aléatoire. Pour les intégrations suivantes l'évolution est dans le même sens tant qu'il y a détection.

S'il n'y a pas détection, le sens d'évolution du retard s'inverse. Il va donc augmenter avec chaque fois un nouveau pas de retard aléatoire. Il retrouve une détection en quelques impulsions selon l'amplitude successive des pas de retard. Le retard augmentant, il y a des détections successives. L'augmentation du retard se poursuit jusqu'à la première absence de détection. Cette absence de détection déclenche l'inversion du sens d'évolution du retard. Le sens d'évolution du retard reste constant pour retrouver des détections. Ce cycle est répété jusqu'à l'obtention des paramètres (position, vitesse) avec une précision satisfaisante.

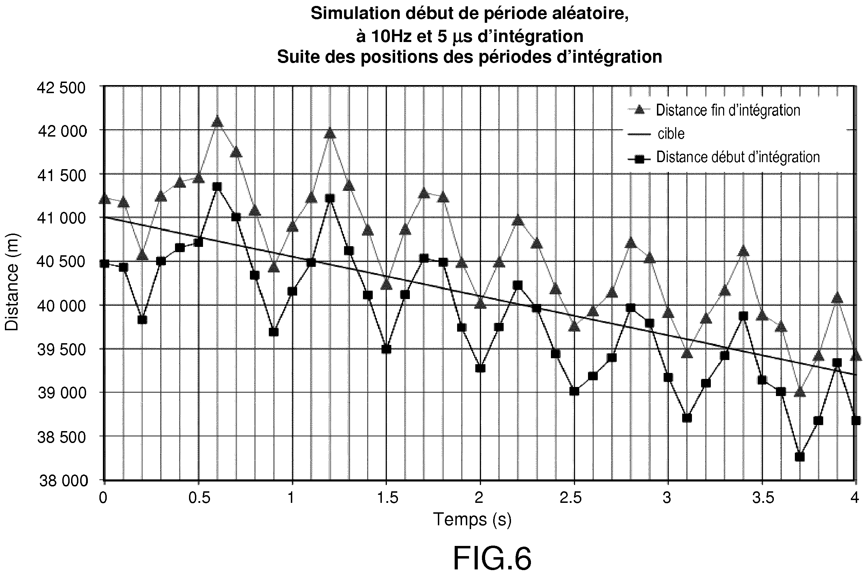

Une simulation de cette étape est illustrée figure 6 sur une cible qui à l'instant noté 0 est à 41000 m et avec une vitesse radiale de -450 m/s, donc se rapprochant. Il y a émission des impulsions à 10 Hz.

Le moment de chaque émission est daté. La position de chaque période d'intégration relativement à l'émission de l'impulsion est mesurée et enregistrée, en étant associée à la date de l'émission de l'impulsion. La possibilité d'un bruit temporel affectant la position de la période d'intégration n'affecte pas le processus de variation aléatoire du déplacement de la période d'intégration dès lors que la valeur effective de la position est précisément enregistrée.

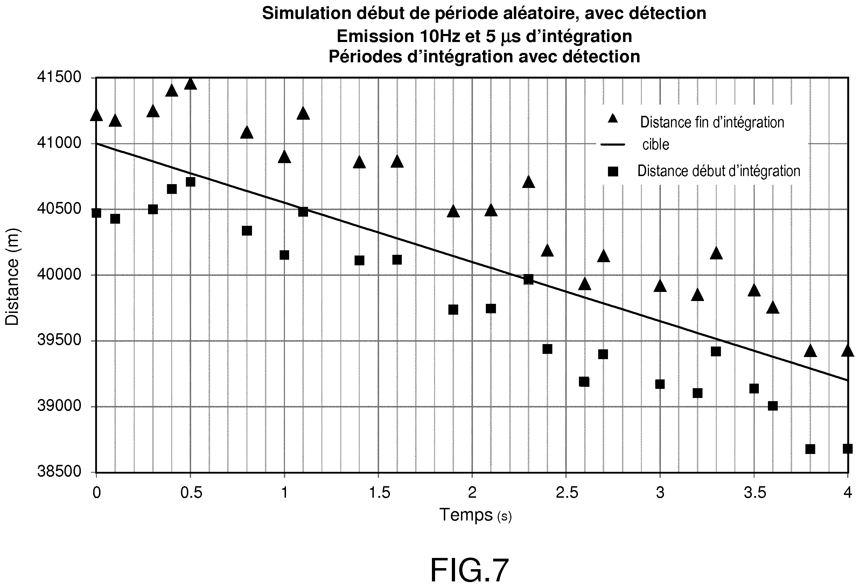

Le traitement est fait en parallèle des émissions et de l'acquisition des périodes d'intégration avec détection. Pour le traitement ne sont conservées que les données correspondant à des détections comme montré figure 7.

La dernière durée d'intégration avec détection de l'étape de première réduction est de 5 μs. Elle était comprise entre 270 et 275 μs correspondant à une distance possible de 40472 à 41221 m (pour une vitesse exacte de la lumière dans le vide).

Au cours des quatre secondes suivantes (= temps de mesure du système), avec des impulsions émises à une fréquence de répétition de 10 Hz, la position de la période d'intégration évolue aléatoirement comme décrit ci-dessus. La largeur de la durée d'intégration est de 5 μs. Sa position dépend de la position précédente déplacée d'une valeur aléatoire dans un sens dépendant de la détection ou non détection dans la période précédente.

Traitement des données conservées.

Ne sont retenues que les périodes d'intégration où il y a eu détection comme montré figure 7. Les impulsions émises à 0.2 ou 0.6 ou 0.7 s par exemple n'ont pas générées de détection d'écho et ne sont donc pas retenues.

La vitesse de la cible n'est pas connue, mais elle est comprise entre une valeur maximale limite d'éloignement et une valeur minimale limite de rapprochement. La valeur minimale limite et la valeur maximale limite sont des hypothèses connues. Par exemple -1200 m/s en rapprochement et +300 m/s en éloignement.

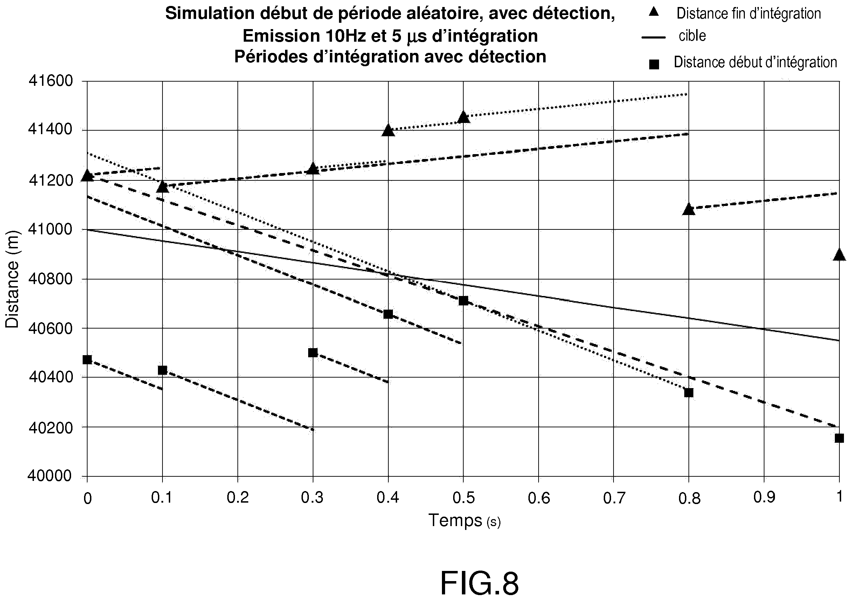

On va décrire le traitement des données au cours de la mesure, en relation avec la figure 8.

La période au temps 0 représente le domaine de distances dans lequel est la cible. La cible a une vitesse relative constante appartenant au domaine -1200 m/s et +300 m/s. Du fait de ces vitesses limites, entre 0 et 0.1 s, le domaine dans lequel est la cible est délimité par les segments en pointillé moyen attachés aux distances de début et de fin d'intégration et dont les pentes sont la vitesse minimale limite et la vitesse maximale limite.

La nouvelle détection à 0.1 s délimite un domaine de distances qui est inclus dans la projection du domaine généré au temps 0. La cible est entre les bornes de distances de début et de fin d'intégration à 0.1 s, puis est dans le domaine délimité par les droites en pointillé s'appuyant sur ces bornes et dont les pentes sont la vitesse minimale limite et la vitesse maximale limite.

La prochaine détection a lieu à 0.3 s. La borne inférieure est incluse dans la projection précédente et donc devient la nouvelle borne. La borne supérieure (projetée en pointillé fin) est au-delà du segment s'appuyant sur la borne supérieure à 0.1 s : elle n'est donc pas retenue. Le segment précédent s'appuyant s'appuyant sur la borne supérieure à 0.1 s délimite toujours le domaine où est la cible.

A 0.4 s la borne inférieure devient la nouvelle borne. On remarque que la trace s'appuyant sur cette borne est bien toujours incluse depuis le temps 0 dans toutes les périodes avec détection. La borne supérieure est au-delà du segment s'appuyant sur la période à 0.1 s.

A 0.5 s la borne inférieure devient la nouvelle borne. Mais la pente de la droite représentant la vitesse minimale limite de la cible (en pointillé fin) sort des périodes à 0 et à 0.1 s : la cible ne peut donc pas avoir cette vitesse minimale extrême. La vitesse minimale de la cible n'est pas inférieure à la pente de la droite passant par la borne supérieure à 0s et la borne inférieure à 0.5 s.

Il en est de même à 1 s. La vitesse maximale limite n'est plus la vitesse maximale extrême mais la pente de la droite (en pointillé large) s'appuyant sur la borne inférieure à 0.5 s et la borne supérieure à 1s.

Lorsqu'il n'existe plus de droite de pente égale aux vitesses extrêmes devant passer par toutes les périodes d'intégration ayant eu une détection, il faut rechercher les droites dont la pente est maximale ou minimale passant par toutes les périodes de détection. A tout instant, la distance de la cible est comprise entre les dernières droites valides pour les instants postérieurs aux bornes sur lesquelles s'appuient les deux droites dont les pentes sont la vitesse minimale et la vitesse maximale.

A chaque détection $D_i$ sont associés :

- un temps $t_i$ d'émission d'une impulsion,
- une distance de début d'intégration (Intégration début) $Id_i$ appelée borne inférieure de la détection $D_i$ et

- une distance de fin d'intégration (Intégration fin) $If_i$ appelée borne supérieure de la détection $D_i$.

Après $i$ détections, la droite de vitesse maximale est la droite de plus forte pente dont tous les débuts de périodes d'intégration retenues sont en-dessous de la droite et toutes les fins de périodes retenues sont au-dessus.

Après chaque détection une vitesse maximale $VMax_{k,l}$ est calculée en tenant compte des $n$ jeux de valeurs accumulées depuis le début de cette étape.

$$VMax_{k,l} = Minimum\left[\frac{(If_j - Id_i)}{(t_j - t_i)}\right] \ \forall j > i \ \forall i < n$$

Les indices k et *l* sont les valeurs de *i* et *j* de la pente la plus faible.

La droite de vitesse maximale passe par la borne inférieure de $D_k$ et la borne supérieure de $D_l$.

Les autres droites ne passent pas par toutes les périodes d'intégration avec détection de 0 à n.

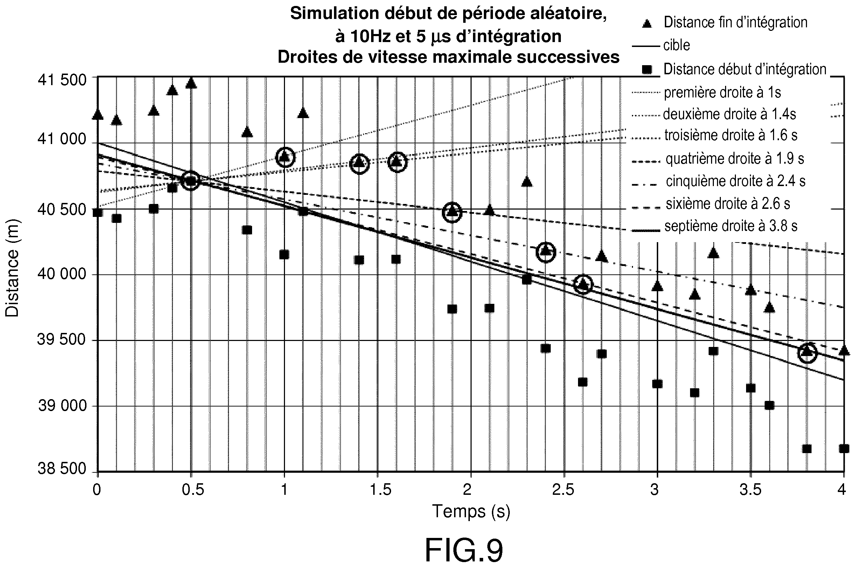

La figure 9 montre en exemple les droites maximales successives au fur et à mesure des acquisitions.

Les toutes premières droites ne sont pas représentées car elles correspondent à des vitesses maximales très supérieures à l'hypothèse de vitesse maximale limite envisagée par le système qui est ici de 300 m/s en éloignement.

La première droite s'appuie sur le début d'intégration à 0,5 s et sur la fin d'intégration à 1.0 s. Cette droite reste valide en prenant en compte la détection à 1.1 s.

Une nouvelle droite (deuxième droite) répond aux critères pour la détection jusqu'à 1.4 s. Et ainsi de suite.

La septième droite s'appuie sur le début d'intégration à 1.1 s et la fin d'intégration à 3.8 s.

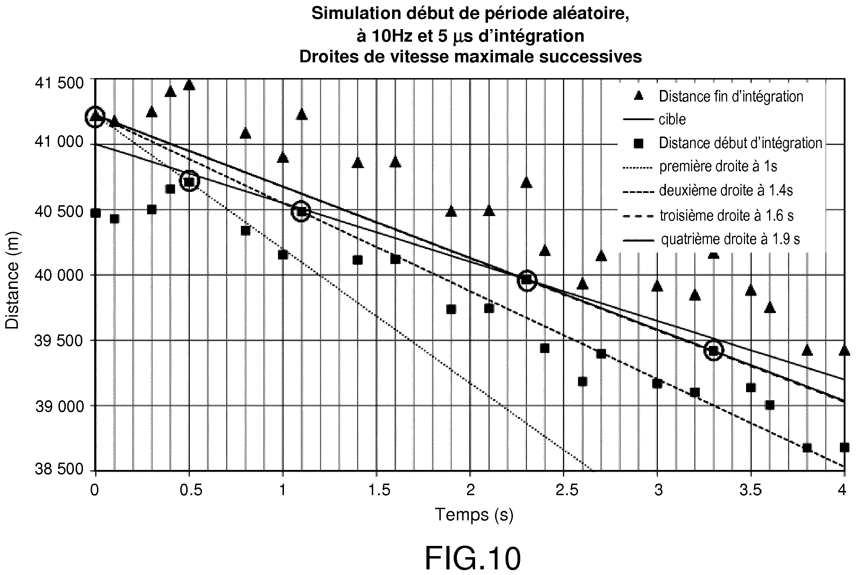

De la même manière la droite de vitesse minimale $VMin_{t,u}$ est recherchée, avec un exemple montré figure 10. C'est la droite passant par la distance de fin d'intégration et la distance de début d'intégration ultérieure, dont la pente est la plus forte, et passant dans toutes les périodes d'intégration de 0 à *n*.

$$VMin_{t,u} = Maximum\left[\frac{(Id_j - If_i)}{(t_j - t_i)}\right] \ \forall j > i \ \forall i < n$$

Les indices *t* et *u* sont les valeurs de *i* et *j* de la pente la plus forte.

La droite de vitesse minimale passe par la borne supérieure de $D_t$ et la borne inférieure de $D_u$.

Les autres droites ne passent pas par toutes les périodes d'intégration avec détection de 0 à *n*.

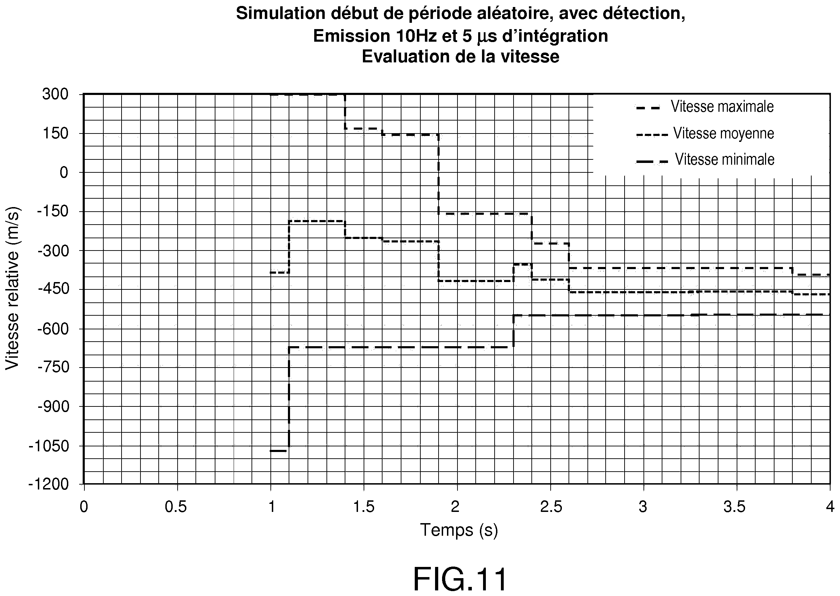

Au fur et à mesure des détections l'encadrement de la vitesse réelle par la vitesse minimale et la vitesse maximale, se réduit. La figure 11 montre un exemple d'évolution des valeurs des vitesses minimales et maximales entre lesquelles la vitesse estimée de la cible est comprise. La valeur moyenne est une bonne estimation qui converge vers la vitesse réelle. Pour mémoire dans cette simulation la vitesse de la cible est de - 450 m/s.

Au fur et à mesure du processus, après chaque détection, la droite de vitesse minimale et la droite de vitesse maximale sont recalculées. Pour des temps ultérieurs elles bornent le domaine de distances dans lequel évolue la cible. A chaque instant après la dernière détection, les deux droites bornent le domaine de distances où est la cible.

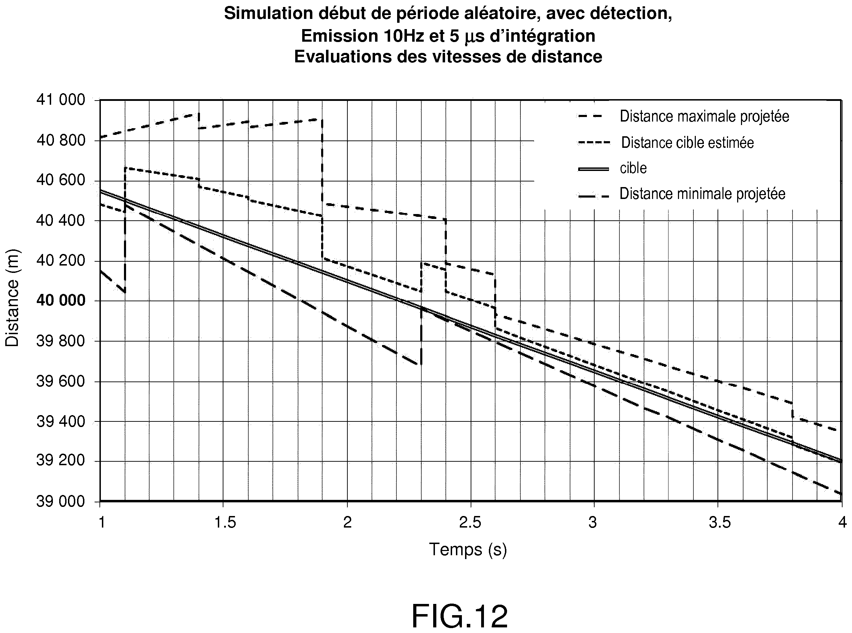

A chaque instant la valeur moyenne est une estimation de la distance de la cible. La courbe en figure 12 représente un exemple d'évolution de la connaissance de la distance de la cible au cours du temps. La tolérance associée à cette valeur est donnée par l'écart entre les deux droites.

Il est intéressant de voir que dans cet exemple montré figure 12, la distance de la cible estimée à 2.6 s est à 35 m de la position réelle de la cible, malgré une largeur de période d'intégration correspondant à 750 m.

Le procédé selon l'invention présente les avantages suivants sur le procédé de détection classique.

La détection classique à l'aide d'une photodiode suivie d'un circuit transimpédance ne permet pas une aussi bonne sensibilité qu'un imageur. De plus, la présence de l'imageur permet un excellent alignement de l'émission laser vers la cible : la divergence du faisceau de télémétrie peut donc être réduite. Ce qui a comme avantage d'augmenter l'éclairement de la cible et donc de fournir un écho plus fort. il y a un gain sur la sensibilité de la détection de l'écho et un renforcement de l'écho. Il en résulte que pour une même source laser et un même diamètre de l'optique de réception la portée de télémétrie est significativement augmentée.

L'imageur peut en outre fournir des paramètres d'écartométrie de la cible pour permettre une poursuite fine de la cible.

**Revendications**

1.  Procédé de mesure de distance d'une cible au moyen d'un émetteur d'impulsions (1) et d'un détecteur matriciel (2), qui comporte une étape A) de détermination de la direction de la cible par rapport à une direction connue des impulsions émises, et d'une première période d'intégration pendant laquelle un écho d'une impulsion émise par l'émetteur et rétrodiffusée par la cible, est détecté par le détecteur, déterminant une première tranche de distances dans laquelle est située la cible, **caractérisé en ce que** le détecteur matriciel comporte des mini-détecteurs spatiaux couplés à des condensateurs de durée d'intégration commandée par une polarisation des mini-détecteurs, et **en ce que** le procédé comporte les étapes suivantes :

    B) Réduction de la première tranche de distances au cours d'itérations successives de télémétrie c'est-à-dire émission d'une impulsion par l'émetteur et test de détection d'un écho par le détecteur, réalisées :

    - à partir de la première période d'intégration,
    - par dichotomie de la durée d'intégration et jusqu'à atteindre une durée d'intégration minimale prédéterminée, et
    - basées sur la détection d'un écho de la cible,

    une deuxième tranche de distances dans laquelle est située la cible, et incluse dans la première tranche de distances, étant déterminée à l'issue de cette étape à partir de la période d'intégration de la dernière itération,
    C) Réduction de la deuxième tranche de distances au cours d'itérations successives de télémétrie réalisées :

    - à partir de la période d'intégration issue de l'étape B,
    - par variations de la position de la période d'intégration, avec des durées d'intégration constantes,
    - et basées sur la détection d'un écho de la cible,

    une troisième tranche de distances dans laquelle est située la cible, et incluse dans la deuxième tranche de distances, étant déterminée à l'issue de cette étape.

2.  Procédé de mesure de distance d'une cible selon la revendication précédente, **caractérisé en ce que** la direction est déterminée en mode passif et **en ce que** la première tranche de distances est déterminée en mode actif par les sous-étapes suivantes :

    - Choix d'une période d'intégration initiale définie par une position temporelle prédéterminée et une durée d'intégration maximale, correspondant à une tranche de distances,
    - Balayage d'un domaine de distances prédéterminé par télémétries, à partir de la période d'intégration initiale et dans des périodes d'intégration successives adjacentes de même durée d'intégration, la première période d'intégration pendant laquelle un écho est détecté déterminant la première tranche de distances dans laquelle est située la cible.

3.  Procédé de mesure de distance d'une cible selon la revendication 1, **caractérisé en ce que** la direction et la première tranche de distances sont déterminées simultanément et en mode actif.

4.  Procédé de mesure de distance d'une cible selon l'une des revendications précédentes, **caractérisé en ce qu'**au cours des itérations successives, les périodes d'intégration sont établies en prenant en compte un recouvrement prédéterminé lié à une faible sensibilité du détecteur au début de la durée d'intégration.

5.  Procédé de mesure de distance d'une cible selon l'une des revendications précédentes, **caractérisé en ce que** la cible a une vitesse relative et **en ce qu'**au cours des itérations successives chaque période d'intégration est établie en prenant en compte la vitesse relative de la cible.

6.  Procédé de mesure de distance d'une cible selon la revendication précédente, **caractérisé en ce que** la vitesse relative est connue.

7.  Procédé de mesure de distance d'une cible selon l'une des revendications précédentes, **caractérisé en ce que** les variations de la position de la période d'intégration sont obtenues par dichotomies de la position de la période d'intégration au cours des itérations successives, la troisième tranche de distances étant déterminée à partir de la période d'intégration de la dernière itération.

**8.** Procédé de mesure de distance d'une cible selon l'une des revendications 1 à 5, **caractérisé en ce que** la cible a une vitesse relative constante non connue mais comprise entre une vitesse minimale de rapprochement et une vitesse maximale d'éloignement prédéterminées, et **en ce que** la réduction de la deuxième tranche de distances est obtenue au cours des itérations successives avec à chaque télémétrie :

- une variation aléatoire de la position de la période d'intégration selon un sens, le sens de variation s'inversant dès une première absence de détection d'écho suivant une période d'intégration avec détection,
- lorsqu'un écho a été détecté, un enregistrement de la date d'émission de l'impulsion et de la position de la période d'intégration correspondante,
- un calcul d'une droite de vitesse minimale et d'une droite de vitesse maximale à partir des dates et positions enregistrées,
- la vitesse relative de la cible étant comprise entre la pente de la droite de vitesse minimale et la pente de la droite de vitesse maximale, et
- à tout instant, la troisième tranche de distances étant comprise entre la droite de vitesse minimale et la droite de vitesse maximale.

**9.** Un produit programme d'ordinateur, ledit programme d'ordinateur comprenant des instructions de code permettant d'effectuer les étapes du procédé de mesure de distance d'une cible selon l'une quelconque des revendications 1 à 8, lorsque ledit programme est exécuté sur un ordinateur.

**10.** Système de mesure de distance d'une cible qui comprend :

- un émetteur d'impulsions (1),
- un détecteur matriciel (2) comportant des mini-détecteurs spatiaux couplés à des condensateurs de durée d'intégration commandée par une polarisation des mini-détecteurs,
- des moyens (3) d'orientation de l'émetteur et du détecteur,
- une unité de traitement (4) apte à synchroniser l'émetteur et le détecteur, à commander les moyens d'orientation et à mettre en œuvre le procédé selon l'une des revendications 1 à 8.

**Patentansprüche**

**1.** Verfahren zum Messen der Entfernung eines Ziels mittels eines Impulssenders (1) und eines Matrixdetektors (2), das einen Schritt A) des Bestimmens der Richtung des Ziels in Bezug auf eine bekannte Richtung der emittierten Impulse und einer ersten Integrationsperiode beinhaltet, während der ein Echo eines vom Sender emittierten und vom Ziel zurückgestreuten Impulses vom Detektor detektiert wird, unter Bestimmung eines ersten Entfernungsabschnitts, innerhalb dessen das Ziel liegt, **dadurch gekennzeichnet, dass** der Matrixdetektor räumliche Minidetektoren umfasst, die mit Kondensatoren von Integrationsdauer gekoppelt sind, gesteuert durch eine Polarisation der Minidetektoren, und dadurch, dass das Verfahren die folgenden Schritte beinhaltet:

B) Reduzieren des ersten Entfernungsabschnitts im Laufe aufeinander folgender Telemetriewiederholungen, das heißt Emission eines Impulses durch den Sender und Prüfung der Detektion eines Echos durch den Detektor, realisiert:

- auf der Basis der ersten Integrationsperiode,
- durch Dichotomie der Integrationsdauer und bis zum Erreichen einer vorbestimmten Mindestintegrationsdauer, und
- auf der Basis der Detektion eines Echos des Ziels,

wobei ein zweiter Entfernungsabschnitt, innerhalb dessen das Ziel liegt und der im ersten Entfernungsabschnitt eingeschlossen ist, am Ausgang dieses Schrittes auf der Basis der Integrationsperiode der letzten Wiederholung bestimmt wird,
C) Reduzieren des zweiten Entfernungsabschnitts im Laufe aufeinander folgender Telemetriewiederholungen, realisiert:

- auf der Basis der Integrationsperiode von Schritt B,
- durch Variationen der Position der Integrationsperiode mit konstanten Integrationsdauern,
- und auf der Basis der Detektion eines Echos des Ziels,

- wobei ein dritter Entfernungsabschnitt, innerhalb dessen das Ziel liegt und der im zweiten Entfernungsabschnitt eingeschlossen ist, am Ausgang dieses Schrittes bestimmt wird.

2. Verfahren zum Messen einer Entfernung eines Ziels nach dem vorherigen Anspruch, **dadurch gekennzeichnet, dass** die Richtung im passiven Modus bestimmt wird, und dadurch, dass der erste Entfernungsabschnitt im aktiven Modus durch die folgenden Unterschritte bestimmt wird:

- Wählen einer anfänglichen Integrationsperiode, definiert durch eine vorbestimmte zeitliche Position und eine maximale Integrationsdauer entsprechend einem Entfernungsabschnitt,
- Abtasten eines Bereichs von durch Telemetrie bestimmten Entfernungen auf der Basis der anfänglichen Integrationsperiode und in benachbarten aufeinander folgenden Integrationsperioden derselben Integrationsdauer, wobei die erste Integrationsperiode, während der ein Echo detektiert wird, den ersten Entfernungsabschnitt bestimmt, innerhalb dessen das Ziel liegt.

3. Verfahren zum Messen einer Entfernung eines Ziels nach Anspruch 1, **dadurch gekennzeichnet, dass** die Richtung und der erste Entfernungsabschnitt gleichzeitig und im aktiven Modus bestimmt werden.

4. Verfahren zum Messen einer Entfernung eines Ziels nach einem der vorherigen Ansprüche, **dadurch gekennzeichnet, dass** im Laufe der aufeinander folgenden Wiederholungen die Integrationsperioden unter Berücksichtigung einer vorbestimmten Abdeckung verbunden mit einer geringen Empfindlichkeit des Detektors am Anfang der Integrationsdauer festgelegt werden.

5. Verfahren zum Messen einer Entfernung eines Ziels nach einem der vorherigen Ansprüche, **dadurch gekennzeichnet, dass** das Ziel eine relative Geschwindigkeit hat, und dadurch, dass im Laufe der aufeinander folgenden Wiederholungen jede Integrationsperiode unter Berücksichtigung der relativen Geschwindigkeit des Ziels festgelegt wird.

6. Verfahren zum Messen einer Entfernung eines Ziels nach dem vorherigen Anspruch, **dadurch gekennzeichnet, dass** die relative Geschwindigkeit bekannt ist.

7. Verfahren zum Messen einer Entfernung eines Ziels nach einem der vorherigen Ansprüche, **dadurch gekennzeichnet, dass** die Variationen der Position der Integrationsperiode durch Dichotomien der Position der Integrationsdauer im Laufe der aufeinander folgenden Wiederholungen erhalten werden, wobei der dritte Entfernungsabschnitt auf der Basis der Integrationsperiode der letzten Wiederholung bestimmt wird.

8. Verfahren zum Messen einer Entfernung eines Ziels nach einem der Ansprüche 1 bis 5, **dadurch gekennzeichnet, dass** das Ziel eine unbekannte konstante relative Geschwindigkeit hat, die aber zwischen einer vorbestimmten Mindestannäherungsgeschwindigkeit und einer Höchstentfernungsgeschwindigkeit liegt, und dadurch, dass die Reduzierung des zweiten Entfernungsabschnitts im Laufe der aufeinander folgenden Wiederholungen mit jeder Telemetrie erhalten wird:

- eine zufällige Variation der Position der Integrationsperiode in einer Richtung, wobei die Variationsrichtung ab einem ersten Fehlen einer Echodetektion gemäß einer Integrationsperiode mit Detektion umgekehrt wird,
- wenn ein Echo detektiert wurde, eine Aufzeichnung des Zeitpunkts der Emission des Impulses und der Position der entsprechenden Integrationsperiode,
- eine Berechnung einer Mindestgeschwindigkeitsstrecke und einer Höchstgeschwindigkeitsstrecke auf der Basis der registrierten Zeiten und Positionen,
- wobei die relative Geschwindigkeit des Ziels zwischen der Steigung der Mindestgeschwindigkeitsstrecke und der Steigung der Höchstgeschwindigkeitsstrecke liegt, und
- wobei zu jedem Zeitpunkt der dritte Entfernungsabschnitt zwischen der Mindestgeschwindigkeitsstrecke und der Höchstgeschwindigkeitsstrecke liegt.

9. Computerprogrammprodukt, wobei das Computerprogramm Code-Befehle umfasst, die es zulassen, die Schritte des Verfahrens zum Messen der Entfernung eines Ziels nach einem der Ansprüche 1 bis 8 durchzuführen, wenn das Programm auf einem Computer ausgeführt wird.

10. System zum Messen einer Entfernung eines Ziels, das Folgendes umfasst:

- einen Impulssender (1),
- einen Matrixdetektor (2), der räumliche Minidetektoren umfasst, die mit Kondensatoren von Integrationsdauer gekoppelt sind, gesteuert durch eine Polarisation der Minidetektoren,
- Mittel (3) zum Orientieren des Senders und des Detektors,
- eine Verarbeitungseinheit (4) zum Synchronisieren des Senders und des Detektors, zum Steuern der Orientierungsmittel und zum Durchführen des Verfahrens nach einem der Ansprüche 1 bis 8.

**Claims**

1. A method of measuring distance of a target by means of a pulse emitter (1) and of a matrix detector (2) comprising a step A) of determination of the direction of the target with respect to a known direction of the emitted pulses, and of a first integration period during which an echo of a pulse emitted by the emitter and backscattered by the target is detected by the detector, determining a first distance slice in which the target is situated, **characterized in that** the matrix detector comprises spatial mini-detectors coupled to capacitors with a duration of integration which is controlled by a polarization of the mini-detectors, and **in that** the method comprises the following steps:

   B) Reduction of the first distance slice in the course of successive telemetry iterations, that is to say emission of a pulse by the emitter and testing of detection of an echo by the detector, which are carried out:

   - on the basis of the first integration period,
   - by dichotomy of the duration of integration and until a predetermined minimum duration of integration is reached, and
   - based on the detection of an echo of the target,

   a second distance slice in which the target is situated, and included in the first distance slice, being determined on completion of this step on the basis of the integration period of the last iteration,
   C) Reduction of the second distance slice in the course of successive telemetry iterations which are carried out:

   - on the basis of the integration period arising from step B,
   - by variations of the position of the integration period, with constant durations of integration,
   - and based on the detection of an echo of the target,

   a third distance slice in which the target is situated, and included in the second distance slice, being determined on completion of this step.

2. The method of measuring distance of a target as claimed in the preceding claim, **characterized in that** the direction is determined in passive mode and **in that** the first distance slice is determined in active mode by the following substeps:

   - Choosing of an initial integration period defined by a predetermined temporal position and a maximum duration of integration, corresponding to a distance slice,
   - Scanning of a distance domain predetermined by telemetries, on the basis of the initial integration period and in adjacent successive integration periods of the same duration of integration, the first integration period during which an echo is detected determining the first distance slice in which the target is situated.

3. The method of measuring distance of a target as claimed in claim 1, **characterized in that** the direction and the first distance slice are determined simultaneously and in active mode.

4. The method of measuring distance of a target as claimed in one of the preceding claims, **characterized in that** in the course of the successive iterations, the integration periods are established by taking into account a predetermined overlap related to a low sensitivity of the detector at the start of the duration of integration.

5. The method of measuring distance of a target as claimed in one of the preceding claims, **characterized in that** the target has a relative speed and **in that** in the course of the successive iterations each integration period is established by taking into account the relative speed of the target.

6. The method of measuring distance of a target as claimed in the preceding claim, **characterized in that** the relative speed is known.

7. The method of measuring distance of a target as claimed in one of the preceding claims, **characterized in that** the variations of the position of the integration period are obtained by dichotomies of the position of the integration period in the course of the successive iterations, the third distance slice being determined on the basis of the integration period of the last iteration.

8. The method of measuring distance of a target as claimed in one of claims 1 to 5, **characterized in that** the target has a constant relative speed which is unknown but lies between a predetermined minimum approach speed and a predetermined maximum speed of remoteness, and **in that** the reduction of the second distance slice is obtained in the course of the successive iterations with at each telemetry:

   - a random variation of the position of the integration period according to a direction, the direction of variation reversing as soon as there is a first absence of echo detection according to an integration period with detection,
   - when an echo has been detected, a recording of the date of emission of the pulse and of the position of the corresponding integration period,
   - a calculation of a minimum speed straight line and of a maximum speed straight line on the basis of the dates and positions recorded,
   - the relative speed of the target being between the slope of the minimum speed straight line and the slope of the maximum speed straight line, and
   - at any instant, the third distance slice being between the minimum speed straight line and the maximum speed straight line.

9. A computer program product, said computer program comprising code instructions making it possible to perform the steps of the method of measuring distance of a target as claimed in any one of claims 1 to 8, when said program is executed on a computer.

10. A system for measuring distance of a target which comprises:

   - a pulse emitter (1),
   - a matrix detector (2) comprising spatial mini-detectors coupled to capacitors whose duration of integration is controlled by a polarization of the mini-detectors,
   - means (3) for orienting the emitter and the detector,
   - a processing unit (4) able to synchronize the emitter and the detector, to control the orientation means and to implement the method as claimed in one of claims 1 to 8.

4

3

1

11

| Emetteur impulsionnel | - - - - - - - - - → Vers la cible |

Unité de traitement

| Détecteur spatial matriciel | ← - - - - - - - Provenant de la cible |

21

2

3è tranche de distance

# FIG.1

## Sensibilité durant l'intégration

FIG.2

## Recherche de la tranche distance

FIG.3

1ᵉʳᵉ tranche de distances

**Dichotomie de la largeur de l'intégration**

2è tranche de
distances

14000  16000  18000  20000  22000  24000  26000  2800  30000

Distance (m)

# FIG.4

**Dichotomie de la position de l'intégration**

2è tranche de
distances

14200     14400     14600     14800     15000     15200     15400     15600

Distance (m)

3è tranche de
distances

# FIG.5

**Simulation début de période aléatoire,
à 10Hz et 5 µs d'intégration
Suite des positions des périodes d'intégration**

FIG.6

EP 3 397 984 B1

Simulation début de période aléatoire, avec détection
Emission 10Hz et 5 μs d'intégration
Périodes d'intégration avec détection

FIG.7

EP 3 397 984 B1

FIG.8

29

FIG.9

Simulation début de période aléatoire,
à 10Hz et 5 μs d'intégration
Droites de vitesse maximale successives

Legend:
▲ Distance fin d'intégration
— cible
■ Distance début d'intégration
······ première droite à 1s
---- deuxième droite à 1.4s
-- -- troisième droite à 1.6 s
— quatrième droite à 1.9 s

Distance (m) vs Temps (s)

FIG.10

Simulation début de période aléatoire, avec détection,
Emission 10Hz et 5 µs d'intégration
Evaluation de la vitesse

FIG.11

Simulation début de période aléatoire, avec détection,
Emission 10Hz et 5 µs d'intégration
Evaluations des vitesses de distance

FIG.12

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2515066 A
- EP 2009066360 W

- EP 13783289